(19)

Europäisches
Patentamt
European
Patent Office
Office européen
des brevets

(11) **EP 3 909 702 A1**

(12) **EUROPEAN PATENT APPLICATION**

(43) Date of publication:
**17.11.2021 Bulletin 2021/46**

(21) Application number: **21183285.2**

(22) Date of filing: **18.12.2019**

(51) Int Cl.:
*B22C 1/16* (2006.01)          *B22C 1/22* (2006.01)
*B22C 9/02* (2006.01)          *C08F 220/60* (2006.01)
*C08G 61/12* (2006.01)          *C08J 5/04* (2006.01)
*C08K 3/36* (2006.01)          *C08K 7/06* (2006.01)
*C08K 7/24* (2006.01)          *C08F 222/10* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.12.2018 EP 18213682**
**13.03.2019 EP 19162618**
**14.03.2019 EP 19162948**
**14.03.2019 EP 19162951**
**15.03.2019 EP 19163141**
**15.03.2019 EP 19163143**
**12.04.2019 EP 19168872**
**06.05.2019 EP 19172774**
**06.05.2019 EP 19172831**
**08.05.2019 EP 19020323**
**08.05.2019 EP 19173366**
**20.05.2019 EP 19175371**
**05.07.2019 EP 19184699**
**26.07.2019 EP 19188602**
**30.09.2019 EP 19200499**
**22.10.2019 EP 19204578**

(62) Document number(s) of the earlier application(s) in
accordance with Art. 76 EPC:
**19821099.9 / 3 860 780**

(71) Applicant: **Lonza Solutions AG**
**3930 Visp (CH)**

(72) Inventors:
- **KUEHNLE, Maximilian**
**4310 Rheinfelden (CH)**
- **BIELER, Nikolaus**
**3902 Brig-Glis (CH)**
- **SOMMER, Marcel**
**79639 Grenzach-Wyhlen (DE)**
- **RITTINER, Bruno**
**3902 Brig-Glis (CH)**
- **ELLINGER, Stefan**
**3930 Visp (CH)**
- **LA DELFA, Gaetano**
**3904 Naters (CH)**

(74) Representative: **Greiner, Elisabeth**
**df-mp Dörries Frank-Molnia & Pohlman**
**Patentanwälte Rechtsanwälte PartG mbB**
**Theatinerstraße 16**
**80333 München (DE)**

Remarks:
This application was filed on 02-07-2021 as a
divisional application to the application mentioned
under INID code 62.

(54) **ISOCYANATE FREE BINDER**

(57)     The present invention relates to a resin composition that comprises an acetoacetate ester compound with at least two acetoacetate ester functional groups, an acrylate compound with at least two acrylate functional groups, and a tertiary amine curing catalyst. This resin composition acts as an isocyanate-free binder that is less toxic to the environment. The invention further discloses a method for preparation fiber reinforced parts comprising fibers and said resin composition as well as a method for the preparation of foundry molds for the casting industry, which is based on said binder.

EP 3 909 702 A1

**Description**

**Field of the Invention**

The present invention relates to a resin composition that comprises an acetoacetate ester compound with at least two acetoacetate ester functional groups, an acrylate compound with at least two acrylate functional groups, and a tertiary amine curing catalyst. This resin composition acts as an isocyanate-free binder that is less toxic to the environment. The invention further discloses a method for preparation fiber reinforced parts comprising fibers and said resin composition as well as a method for the preparation of foundry molds for the casting industry, which is based on said binder.

**Background of the Invention**

Sand casting, also known as sand molded casting, is a metal casting process characterized by using sand as the mold material. It is one of the most commonly used processes in the foundry industry for making metal parts. In sand casting, disposable foundry shapes (usually characterized as molds and cores, these terms are used interchangeably herein) are made by shaping and curing a foundry mix, which is a mixture of sand and an organic or inorganic binder. The binder is used to strengthen the molds and cores for the casting process.

The two commonly used procedures in sand casting are the "no-bake" process and the "cold box" process.

In the "no-bake" process, a foundry aggregate (e.g., sand), binder resin monomers, and a liquid curing catalyst are mixed and compacted to produce a cured foundry shape (i.e., mold or core). In this process, the mixture obtained after mixing of the above components is poured into a molding box and held until the resin solidifies. In the no-bake process, it is important to formulate a foundry mix that provides sufficient worktime to allow shaping after mixing the components before the foundry mix cures to a degree that makes further handling and shaping impossible.

A typical "no-bake" process is described in US 5 459 178 A. Therein, a liquid tertiary amine catalyst is mixed with a foundry aggregate (sand) followed by the addition of a foundry binder, which comprises an admixture of an acetoacetate ester and an $\alpha,\beta$-ethylenically unsaturated monomer in an equivalent ratio of 0.8 to 1.2. The resulting foundry mix is then introduced into a pattern and cured. However, the time required for obtaining adequate hardness is inacceptable long.

The "cold box process" on the other hand refers to a process for making foundry shapes wherein a foundry mix is formed by firstly mixing a foundry aggregate (e.g., sand) and the binder resin monomers, and subsequently curing said foundry mix with a gaseous curing agent to obtain a foundry shape. In the cold box process, the mixture of foundry aggregate and binder (resin) is poured into the molding box prior to curing (i.e., in the absence of a curing catalyst). This means that the desired foundry shape for metal casting is formed prior to initiation of the curing process. As a consequence, very fast curing is desired. This is in contrast to the no-bake processes, wherein the curing agent is already present in the foundry mix when it is poured into the molding box, so that the curing reaction must be slow enough to allow for a certain processing time ("pot life" or "worktime") before it becomes too rigid for further shaping. The cold box process is a high-performance foundry shape manufacturing method that is used in the large series production of cast parts and features high process reliability and productivity. The defining feature of the cold box process is the high reactivity of the binder system (i.e., the resin and the curing catalyst), which enables short production cycles for core production.

The cold box process has eliminated the need for expensive, inconvenient and energy consumptive heat curing. It offers advantages of dimensional accuracy, productivity and potentially higher quality than other core and mold production systems, and the cure cycle is relatively fast. As cold box processes are not dependent on high-temperature heat sources for curing, they yield reduced energy consumption and, through the advantages of productivity and quality, lower cost per finished casting.

The cold box process is particularly well suited for producing smaller cores with complex shapes, since the foundry mixture has excellent flow characteristics and good stripability. Because of the curing at ambient temperature, small, thin sections and protrusions are not over-cured or burned during the time that thicker sections take to cure. In addition, heat curing may be accompanied by dimensional instability of the foundry shape, which is avoided with the cold box process that uses curing at ambient temperature.

In the cold box process, binder systems wherein the crosslinking mechanism is based on polyurethane chemistry are traditionally used. The polyurethane-forming binder typically consists of a phenolic resin component and a polyisocyanate component, which are mixed with sand prior to compacting and curing. The phenolic resin component generally contains small amounts of free phenol, free formaldehyde and organic solvent (e.g., benzene, toluene and/or xylene), all of which are toxic and can smell obnoxiously. These components thus create stress for the environment and workers.

In addition, sand contaminated with phenol, formaldehyde and/or residual organic solvents (e.g. benzene and/or toluene and/or xylene), which accumulates as a byproduct of the casting, requires costly deposition and recycling. Binder systems utilizing less harmful components will lead to a significant reduction of deposition costs. Amine bases that have been used as curing catalysts in the past, such as triethylamine, are intensely odorous compounds and therefore pose a physiologic burden for the workers who are in daily contact with such compounds. Moreover, binder systems based on solid components necessitate the use of solvents for coating the foundry aggregate with the resin components. These solvents not only pose a potential health hazard for workers, but may also reduce the strength or hardness of the resulting molds and cores.

Increasing awareness of environmental issues and pressure from regulatory authorities necessitate the development of new resin formulations and binder systems for the production of sand cores and sand molds which contain a reduced amount of toxic and/or harmful components, or are essentially free of materials that are environmental or health hazards. A major benefit of resin formulations consisting of non-toxic components lies in the reduction of potentially harmful emissions that workers in the foundry industry are exposed to during the casting process. There is thus a need in the art to replace binder systems of the prior art containing, e.g., phenol- and/or formaldehyde and isocyanate with less objectionable binder systems.

The present invention meets that need by providing a method of preparing a foundry shape that allows for fast curing times at ambient temperature, and that employs components that are not subject to the same environmental or health concerns as the phenol/isocyanate-based binder systems of the prior art. The method of the invention provides molds and cores having a high degree of mechanic strength and allows for particularly complex shapes of said molds and cores.

The inventors have surprisingly found a binder system based on a resin formulation that contains acetoacetate compounds comprising at least two acetoacetate functional groups and acrylate compounds comprising at least two acrylate functional groups, that may be cured with a gaseous tertiary amine curing catalyst to provide foundry shapes, i.e., molds and/or cores, with excellent mechanic properties such as hardness and tensile strength. This method avoids the above disadvantages of the prior art.

The inventors have further surprisingly found that the binder system comprising an acetoacetate ester compound, an acrylate compound, and a tertiary amine curing catalyst can also be used for the preparation of fiber reinforced parts that overcomes the disadvantages of the known methods.

Resin Compositions based on Bisphenol-A-Di-Glycidyl-Ether (BADGE) are widely used for the production of fiber-reinforced parts. Bisphenol-A-Di-Glycidyl-Ether based thermoset resin compositions can provide good mechanical properties, such as elastic modulus, heat resistance, chemical stability, cost effectiveness and show acceptable processability. However, it was found that Bisphenol-A (BPA) shows Endocrine disrupting properties which resulted in January 2018 in an addition by the European Chemicals Agency (ECHA) of BPA to a list of substances of very high concern (SVHCs). This rating requires the development of less harmful technical alternatives in order to avoid environmental and health hazards and substitute BPA based resin systems for specific applications wherever possible.

Beside the toxicological aspects there was a need for a method and materials for the preparation of fiber reinforced parts which allows for the adjustment of process and curing times to the set up. Additionally, method and materials need to meet specific requirements of the production process, and which provides parts with good mechanical properties such as strength, e.g. mechanical strength, tensile strength, tensile modulus, modulus of elasticity (such as young's modulus), or hardness (such as Shore hardness or Shore D), which allows for the production of fiber reinforced parts even with complex geometries, and which does not need the use of compounds which raise environmental or health concerns such as Endocrine disrupting properties as in case of e.g. BPA-based resin compositions.

In contrast to methods that employ common resin compositions such as BPA-based resin compositions, the method of the invention utilizes a resin composition that does not comprise compounds with Endocrine disrupting properties and is thus less toxic to the environment as well as to the any people exposed to the components or using the cured fiber reinforced parts.

The cured resin composition of the invention possesses a high degree of strength, e.g. mechanical strength, tensile strength, tensile modulus, or hardness.

Moreover, compared to using BPA containing resin compositions, the resin composition of the invention can achieve high tensile strength even under ambient temperature curing conditions. This allows the part manufacturer to work with tools that does not necessarily need to be heated.

Additionally, according to the geometry of the part and/ or to the content or amount of resin, the cure cycle can be adjusted to the need of the process cycle time through an adjustment of resin components concentrations. Even a fast curing of the resin composition of the invention is possible to reduce the cycle time for the production of fiber reinforced parts.

Furthermore the cycle time can be additionally shortened by raising the curing temperature. Also the neat resin composition of the invention can chose to have a low viscosity, for example between 25 and 250 mPas at 20 °C, which results in a good fiber wetting, low void content, and homogenously cured parts without visual defects, even if a complex tool design for difficult fiber reinforced parts geometries are used.

Additionally, in contrast to aromatic based Epoxy-Amine thermoset resin compositions, the resin compositions of the invention do not undergo colorization, such as for example yellowing, during production or when the cured material is exposed to sunlight. This allows the usage of the resin composition also for the production of decorative composites parts, especially if colorless or essentially colorless starting material is used. So the resin compositions of the invention combine good mechanical performance with a good optical appearance.

**Figures**

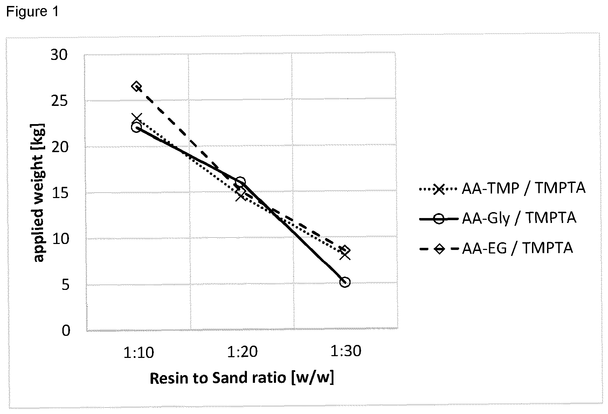

**Figure 1:** Qualitative break test comparison of foundry shapes comprising trimethylolpropane triacetoacetate (AA-TMP), glycerol triacetoacetate (AA-Gly) or ethylene glycol diacetoacetate (AA-EG) acetoacetate ester compounds, polymerized with trimethylolpropane triacrylate (TMPTA).

Results of the qualitative break test comparison between foundry shapes obtained using three different resin formulations in varying amounts relative to the foundry aggregate (here: sand), according to Example 1. Three different relative amounts of resin formulation (acetoacetate ester and acrylate compound) relative to sand were tested (1:10, 1:20 and 1:30 (w/w), respectively). An increasing amount of resin formulation relative to foundry aggregate increases the mechanical strength of the resulting foundry shape in a linear fashion.

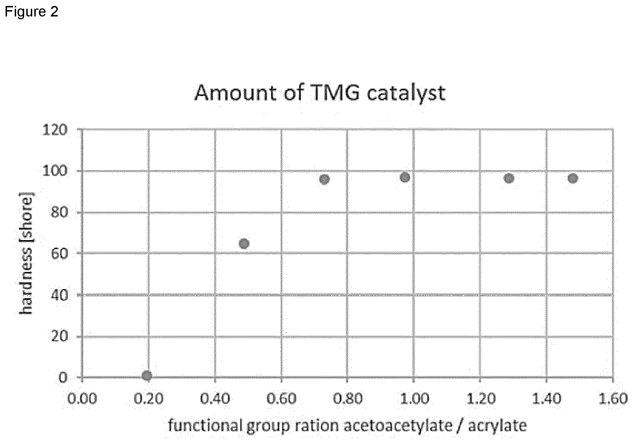

**Figure 2:** Correlation of hardness and amount of curing catalyst. Hardness (shore A) of neat resins (cured binder systems without sand) comprising TMPTA as the acrylate compound and AA-Gly as the acetoacetate ester compound, cured with varying amounts of TMG at room temperature.

Detailed Description of the Invention

ABBREVIATIONS

| | |
|---|---|
| AA | acetoacetyl, acetoacetate, acetoacetyl group |
| AAESTERCOMP | acetoacetate ester compound |
| ACR | acrylate, acrylate group |
| ACRYLCOMP | acrylate compound |
| AMINCAT | amine curing catalyst |
| BADGE | Bisphenol-A-Di-Glycidyl-Ether |
| CONTFILIMP | Continuous Filament Impregnation |
| DABCO | 1,4-diazabicyclo[2.2.2]octane |
| DBN | 1,5-Diazabicyclo(4.3.0)non-5-ene |
| DBU | 1,8-Diazabicyclo(5.4.0)undec-7-ene |
| FIB | fiber |
| FIBRESINCOMP | fiber resin composition |
| FILWIN | Filament Winding |
| FGR | functional group ratio |
| FRP | fiber reinforced part, it can also be called fiber reinforced composite product, fiber reinforced plastic, fiber reinforced plastic composite product, composite product, or composite article |
| psi | pound per square inch, 1 psi = 0.0689476 bar = 6894.76 Pa |
| PULTR | Pultrusion |
| RESINCOMP | resin composition |
| RT | room temperature, ambient temperature |
| RTM | Resin Transfer Molding |
| TEA | trimethylamine |
| TMG | 1,1,3,3-tetramethylguanidine |
| VACINF | Vacuum Infusion |
| WCM | Wet Compression Molding |
| wt% | weight percent or percent per weight; unless indicated otherwise, relative amounts as used herein refer to weight to weight ratios, i.e., percent refers to percent per weight (w/w) |

The terms "resin composition" and "binder system" are used interchangeably herein.

The terms "tertiary amine curing catalyst" and "amine curing catalyst" are used interchangeably herein.

The terms "diacetoacetate of 4,8-bis(hydroxymethyl)tricyclo [5.2.1.0.$^{2,6}$]decane", "bis(hydroxymethyl)tricyclo[5.2.1.0.sup.2,6]decane diacetoacetate" and "bis(hydroxymethyl)tricyclo[5.2.1.0]decane diacetoacetate" are used herein synonymously.

Unless indicated otherwise, relative amounts as used herein refer to weight to weight ratios, i.e., percent refers to percent per weight (w/w).

The term "premix A" as used herein refers to a mixture comprising an acrylate compound as defined herein and an amine curing catalyst as defined herein.

The term "premix B" as used herein refers to a mixture comprising an acetoacetate ester compound as defined herein and an amine curing catalyst as defined herein.

The term "premix C" as used herein refers to a mixture comprising an acetoacetate ester compound as defined herein and an acrylate compound as defined herein.

*Methods of the invention*

In one aspect, the present invention is directed to a method of preparing a foundry shape that avoids the use of phenol-, formaldehyde, halogen and isocyanate containing components, and yet provides a comparable or even improved final hardness and/or strength as the foundry shapes produced by conventional cold box process based on isocyanate-binder systems.

The method of preparing a foundry shape according to the invention comprises the steps of i) mixing a foundry aggregate with a resin formulation to give a foundry mix, optionally shaping said foundry mix, preferably by pouring it into a suitable container such as a molding box, and ii) curing said foundry mix with a tertiary amine curing catalyst, which is provided in the form of a gas and/or in a stream of an inert gas, and optionally obtaining a foundry shape. Said resin formulation comprises one or more acetoacetate ester compounds and one or more acrylate compounds. Each of the one or more acetoacetate ester compounds comprises at least two acetoacetate ester functional groups, and each of the one or more acrylate compounds comprises at least two acrylate functional groups.

In the above method of the invention, one to five acetoacetate ester compounds may be comprised in said resin formulation, preferably one to four acetoacetate ester compounds, more preferably one to three acetoacetate ester compounds, even more preferably one or two acetoacetate ester compounds. Yet more preferably, predominantly only one is present (>95% of a single acetoacetate ester compound) and most preferably only one (>99% of a single acetoacetate ester compound) acetoacetate ester compound is comprised in said resin formulation.

In the above method of the invention, preferably one to ten acrylate compounds may may be comprised in said resin formulation, more preferably one to eight acrylate compounds, even more preferably one to six acrylate compounds, more preferably still, one to five acrylate compounds, yet more preferably, one to four acrylate compounds, even more preferably still, one to three acrylate compounds. Most preferably one or two (especially most preferred, predominantly one (>95%)) acrylate compound is comprised in said resin formulation.

In this method according to the invention, the foundry aggregate is mixed with the one or more acetoacetate ester compounds and the one or more acrylate compounds, before adding the tertiary amine curing catalyst. This will result in thorough mixing of the one or more acetoacetate ester compounds and the one or more acrylate compounds with the foundry aggregate before curing is initiated and thus leads to a more homogenous foundry mix before curing.

Alternatively, the tertiary amine curing catalyst is mixed with the one or more acrylate compounds, this mixture is then added to the one or more acetoacetate ester compounds and, finally, the foundry aggregate is added. Alternatively, the tertiary amine curing catalyst is mixed with the one or more acrylate compounds, this mixture is then added to the foundry aggregate and, finally, the one or more acetoacetate ester compounds is added.

In the method of the invention, the resin formulation and the tertiary amine curing catalysts form a highly beneficial binder system. Various tertiary amine curing catalysts may be used in the method according to the invention. Advantageously, the tertiary amine curing catalyst possesses a boiling point of at least 110 °C, preferably at least 120 °C and most preferred of at least 130 °C (at ambient pressure). Using a tertiary amine catalyst with a high boiling point bears the advantage of reducing the potentially hazardous emissions during the casting process due to a higher vapor pressure compared to tertiary amines with a lower boiling point. It is therefore preferred that the tertiary amine curing catalyst to be used in the method of the invention has a boiling point of at least 110°C, at least 120°C, at least 130 °C, at least 140 °C, at least 150 °C or at least 160 °C, or from 160 °C to 180 °C, or from about from about 160 °C to about 170 °C. In a preferred embodiment, the tertiary amine curing catalyst has a boiling point of from 160 °C to 180 °C.

The tertiary amine curing catalyst to be used in the method of the invention may be provided in the form of a gas or in a stream of an inert gas. A tertiary amine curing catalyst which is carried by a stream of inert gas can be introduced into the foundry mix at a temperature below the boiling point of the tertiary amine. This enables the use of tertiary amines with high boiling points, e.g., boiling points above 130 °C, such as TMG (1,1,3,3-tetramethylguanidine) or DABCO (1,4-diazabicyclo[2.2.2]octane), while keeping energy consumption low. The term "inert gas" as used herein refers to a gas, or mixture of gases that essentially does not influence or participate in the curing reaction. Suitable inert gases are known to the skilled person and include nitrogen, argon, CO2, and pressurized air. In this case, the tertiary amine curing catalyst may be in the form of a gas or an aerosol, or a mixture thereof.

In the method of preparing a foundry shape according to the invention the foundry mix is commonly treated with the tertiary amine curing catalyst in the form of a gas and/or provided in a stream of an inert gas at a flushing pressure ranging from 1.0 bar to 6.0 bar, preferably from 1.2 bar to 5.0 bar, more preferably 1.4 bar to 4.0 bar.

The pKa of the protonated amine species of the tertiary amine curing catalyst may vary over a broad range. Generally, stronger bases, i.e., tertiary amine curing catalyst with greater pKa values provide a higher catalytic activity during the curing reaction. The pKa of the tertiary amine curing catalyst is at least 8.0, or at least 10.0, or at least 11.0, or at least 12.0. Preferably, the pKa of the tertiary amine curing catalyst is from 10.0 to 15.0, and most preferably from 12.0 to 14.0. As used herein, pKa refers to the pKa of the corresponding conjugate base in water.

In the method of preparing a foundry shape according to the invention, the tertiary amine curing catalyst may comprise 1,1,3,3-tetramethylguanidine (TMG) and/or 1,4-diazabicyclo[2.2.2]octane (DABCO). Preferably, the tertiary amine curing catalyst comprises 1,1,3,3-tetramethylguanidine (TMG). Most preferably, the tertiary amine curing catalyst is 1,1,3,3-tetramethylguanidine. The inventors have found that the above tertiary amines, in particular TMG (1,1,3,3-tetramethylguanidine), proved to be highly reactive tertiary amine catalysts when used in gaseous form in the method of the invention. The above tertiary amines provide high reactivity and are less odorous compared to other tertiary amine catalysts, such as triethylamine (TEA) or dimethylisopropylamine typically used in cold box process of the prior art, and therefore reduce the physiological and health burden for workers in a casting plant.

The amount of the tertiary amine curing catalyst to be used in the method of the invention may vary.

Generally, the curing time of a foundry shape produced according to the invention depends on the amount of tertiary amine curing catalyst that is used. Therefore, the amount of the tertiary amine curing catalyst can be varied to adapt the method of the invention to different applications and needs. In the method of the invention, the amount of the tertiary amine curing catalyst required for curing ranges from 0.1% (w/w) to 14% (w/w), from 0.2% (w/w) to 10% (w/w), from 0.3% (w/w) to 5% (w/w), from 0.4% (w/w) to 2.5% (w/w), from 0.5% (w/w) to 2.0% (w/w) or from 0.7% (w/w) to 1.5% (w/w) relative to the amount of resin formulation used in step i). Preferably, the amount of tertiary amine curing catalyst required for curing is from 0.2% (w/w) to 2.5% (w/w), more preferably from 0.4% (w/w) to 2.0% (w/w) and most preferably from 0.7% (w/w) to 1.5% (w/w) relative to the amount of resin formulation employed for producing the foundry shape.

In one embodiment, the amount of tertiary amine curing catalyst is from 0.1% (w/w) to 2% (w/w), preferably from 0.1% (w/w) to 1.0% (w/w), more preferably from 0.15% (w/w) to 0.7% (w/w), and most preferably from 0.15% (w/w) to 0.5% (w/w) relative to the totality of the amount of the one or more acetoacetate ester compound and the one or more acrylate compound.

Residual solvent, but also amine bases used as curing catalysts may reduce hardness and/or tensile strength of the cured foundry mold and/or cores. When using the above tertiary amines, and in particular TMG, as a tertiary amine curing catalyst, the method of the invention is particularly advantageous in that only very low amounts of the tertiary amine curing catalyst are required for complete curing compared to other methods known in the art, which do not reduce hardness and/or tensile strength of the cured foundry mold and/or cores.

In another aspect, subject of the invention is a method for preparation fiber reinforced parts comprising the steps of

    (i) contacting a fiber with a resin composition to provide a fiber resin composition; and
    (ii) curing said fiber resin composition to provide the fiber reinforced part;
    wherein the resin composition comprises

        a) one or more acetoacetate ester compounds comprising at least two acetoacetate ester functional groups,
        b) one or more acrylate compound comprising at least two acrylate functional groups, and
        c) a tertiary amine curing catalyst;

and wherein the fiber resin composition is shaped in step (a), in step (b) or in both steps.

The method may further comprise an optional additional curing step (iii), wherein the fiber reinforced part obtained in step (ii) undergoes a "post-cure treatment". During step (iii), said the fiber reinforced part is heated. The heat applied during this step is typically from about 80°C to about 300°C, more preferably from about 100 °C to 280°C, even more preferably from about 100 °C to about 260°C. The heating in step (iii) is typically applied from about 30 min to about 24 h or even longer, more preferably from 30 min to 16 h. This post-cure treatment may further improve the Tg (glass transition temp) which results in a greater mechanical stability of the final part. Moreover, by exposing the part to a post-curing step the amount of catalyst used may be further reduced without sacrificing the desired material's mechanical and thermomechanical properties.

In the above method of the invention, one to five acetoacetate ester compounds may be comprised in said resin composition, preferably one to four acetoacetate ester compounds, more preferably one to three acetoacetate ester compounds, even more preferably one or two acetoacetate ester compounds. Yet more preferably, predominantly only one is present (>95% of a single acetoacetate ester compound) and most preferably only one (>99% of a single acetoacetate ester compound) acetoacetate ester compound is comprised in said resin composition.

In the above method of the invention, preferably one to ten acrylate compounds may may be comprised in said resin composition, more preferably one to eight acrylate compounds, even more preferably one to six acrylate compounds, more preferably still, one to five acrylate compounds, yet more preferably, one to four acrylate compounds, even more preferably still, one to three acrylate compounds. Most preferably one or two (especially most preferred, predominantly one (>95%)) acrylate compound is comprised in said resin composition.

The one or more amine curing catalysts to be used in the method for preparation fiber reinforced parts of the invention are independently selected from the group consisting of 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) and 1,5-Diazabicyclo(4.3.0)non-5-ene (DBN).

In a preferred embodiment, the one or more amine curing catalysts are independently selected from the group consisting of TMG, DABCO, DBU and DBN.

In a more preferred embodiment, the one or more amine curing catalysts are are independently selected from the group consisting of TMG and DABCO.

Even more preferably, the amine curing catalyst is TMG.

The $pK_a$ of the protonated amine species of the amine curing catalyst may vary over a broad range. Generally, stronger bases, i.e., amine curing catalyst with greater $pK_a$ values provide a higher catalytic activity during the curing reaction. The $pK_a$ of the amine curing catalyst is at least 8, or at least 10, or at least 11, or at least 12. Preferably, the $pK_a$ of the tertiary amine curing catalyst is from 10 to 15, more preferably from 11 to 14, even more preferably from 12 to 14. As used herein, $pK_a$ refers to the $pK_a$ of the corresponding conjugate base in water.

The amount of the amine curing catalyst in the resin composition used in the method for preparation fiber reinforced parts may vary. Generally, the curing time of a fiber reinforced part produced according to the invention depends on the amount of the amine curing catalyst that is used. Therefore, the amount of the amine curing catalyst can be varied to adapt the method of the invention to different applications and needs. In the method of the invention, the amount of the amine curing catalyst may range from 0.01 to 10 wt%, from 0.05 to 7.5 wt%, from 0.05 to 5 wt%, from 0.05 to 2.5 wt%, from 0.05 to 1 wt%, from 0.05 to 0.75 wt%, from 0.075 to 0.5 wt%, or from 0.1 to 0.3 wt%, the wt% being based in the total weight of the resin composition.

The one or more acetoacetate ester compounds to be used in both of the above methods of the invention each comprise at least two acetoacetate ester functional groups. Exemplary acetoacetate ester compounds comprise two, three, four, five or six acetoacetate ester functional groups. Preferably, each of the acetoacetate ester compounds comprises two, three or four acetoacetate ester functional groups. The inventors have found that acetoacetate ester compounds based on primary alcohols generally exhibit faster curing and are thus advantageous in the methods of the invention.

Suitable acetoacetate ester compounds to be used in the methods of the invention are, for example 1,4-butanediol diacetoacetate, 1,6-hexanediol diacetoacetate, neopentyl glycol diacetoacetate, 4,8-bis(hydroxymethyl)tricyclo[5.2.1.0.$^{2,6}$]decane diacetoacetate, 2-methyl-1,3-propanediol diacetoacetate, diethylene glycol diacetoacetate, triethylene glycol diacetoacetate, tetraethylene glycol diacetoacetate, monoethylene glycol diacetoacetate, monopropylene glycol diacetoacetate, dipropylene glycol diacetoacetate, tri- and tetrapropylene glycol diacetoacetate, polyethylene glycol diacetoacetate, polypropylene glycol diacetoacetate, cyclohexane dimethanol diacetoacetate, other diol diacetoacetates, ethoxylated trimethylolethane triacetoactate, propoxylated trimethylolethane triacetoactate, ethoxylated trimethylolpropanetriacetoactate, propoxylated trimethylolpropanetriacetoactate, trimethylolpropane triacetoacetate, pentaerythritol triacetoacetate, glycerol triacetoacetate, trimethylolethane triacetoacetate, other triol triacetoacetates, diacetoacetates of triols, analogous malonate esters, and combinations thereof.

Some further examples of suitable acetoacetate ester compounds to be used in the methods of the invention include tetra-, penta-, and higher acetoacetates of polyols (i.e., polyols on which four, five, or more hydroxyl groups are linked to acetoacetate groups through ester linkages), including, for example, di(trimethylolpropane) tetraacetoacetate, pentaerythritol tetraacetoacetate, dipentaerythritol pentaacetoacetate, dipentaerythritol hexaacetoacetate, acetoacetylated polyvinyl alcohols, acetoacetylated polyester resins, decaglycerol deca-(Z)-oleate and combinations thereof.

Some further examples of suitable acetoacetate ester compounds to be used in the methods of the invention include acetoacetate esters of alcohols such as isosorbide or glucose, and any combinations thereof.

In a preferred embodiment, the one or more acetoacetate ester compounds are independently selected from the group consisting of cyclohexanedimethanol diacetoacetate, glycerol triacetoacetate, neopentyl glycol diacetoacetate, ethylene glycol diacetoacetate, trimethylolpropane triacetoacetate, pentaerythritol tetraacetoacetate, acetoacetylated polyvinyl alcohols and acetoacetylated polyester resins.

In a particularly preferred embodiment, the one or more acetoacetate ester compounds to be used in the methods of the invention are independently selected from the group consisting of trimethylolpropane triacetoacetate, glycerol triacetoacetate and ethylene glycol diacetoacetate.

In an even more preferred embodiment, the acetoacetate ester compound is trimethylolpropane triacetoacetate or glycerol triacetoacetate.

In another preferred embodiment, the acetoacetate ester compound is trimethylolpropane triacetoacetate or ethylene glycol diacetoacetate.

In an especial embodiment, the acetoacetate ester compound is trimethylolpropane triacetoacetate.

In another especial embodiment, the acetoacetate ester compound is glycerol triacetoacetate.

In another especial embodiment, the acetoacetate ester compound is ethylene glycol diacetoacetate.

The amount of the acetoacetate ester compound in the resin composition may vary. The amount of the acetoacetate ester compound may range from 20 to 70 wt%, preferably from 20 to 60 wt%, more preferably from 20 to 55 wt%, the wt% being based in the total weight of the resin composition.

The one or more acrylate compound each comprises at least two acrylate functional groups. Exemplary acrylate compounds comprise two, three, four, five or six acrylate functional groups. Preferably, each of the acrylate compounds comprises two, three or four acrylate functional groups.

Suitable acrylate compounds are, for example, the diacrylate of 4,8-bis(hydroxymethyl)tricyclo [5.2.1.0$^{2,6}$]decane, 2-methyl-1,3-propanediol diacrylate, 1,4-butanediol diacrylate, 1,6-hexanediol diacrylate, neopentyl glycol diacrylate, monoethylene glycol diacrylate, diethylene glycol diacrylate, triethylene glycol diacrylate, tetraethylene glycol diacrylate, polyethylene glycol diacrylate, monopropylene glycol diacrylate, tetrapropylene glycol diacrylate, dipropylene glycol diacrylate, tripropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, ethoxylated trimethylolethane triacrylate, propoxylated trimethylolethane triacrylate, trimethylolpropane triacrylate, ethoxylated trimethyl-olpropanetriacrylate, propoxylated trimethylolpropanetriacrylate, pentaerythritol triacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, pentaerythritol tetraacrylate, dipentaerythritol pentaacrylate, dipentaerythritol hexaacrylate, acrylated aliphatic urethane oligomer, acrylated aromatic urethane oligomer, and the like, and combinations thereof.

In a preferred embodiment, the one or more acrylate compounds are independently selected from the group consisting of pentaerythritol triacrylate, trimethylolpropane triacrylate, 1,6-hexanediol diacrylate, tetraethylene glycol diacrylate, di(trimethylolpropane) tetraacrylate, pentaerythritol tetraacrylate and tripropylene glycol diacrylate.

In a particularly preferred embodiment, the one or more acrylate compounds are independently selected from the group consisting of trimethylolpropane triacrylate, di(trimethylolpropane) tetraacrylate and tripropylene glycol diacrylate.

In an even more preferred embodiment, the acrylate compound is trimethylolpropane triacrylate.

The amount of the acrylate compound in the resin composition may vary. The amount of the acrylate compound may range from 30 to 80 wt%, preferably from 40 to 80 wt%, more preferably from 45 to 80 wt%, the wt% being based in the total weight of the resin composition.

Preferably, the term "ethoxylated" means a total content of 1 to 10 ethylenoxide units per molecule. Preferably the term "propoxylated" means a total content of 1 to 10 propylenoxide units per molecule.

In a particularly advantageous embodiment of the present invention,
the one or more acetoacetate ester compounds to be used in the methods of the invention are independently selected from the group consisting of cyclohexane dimethanol diacetoacetate, glycerol triacetoacetate, neopentyl glycol diacetoacetate, ethylene glycol diacetoacetate, trimethylolpropane triacetoacetate, pentaerythritol tetrakis-acetoacetate, acetoacetylated polyvinyl alcohols and acetoacetylated polyester resins;
the one or more acrylate compounds are independently selected from the group consisting of pentaerythritol triacrylate, trimethylolpropane triacrylate, 1,6-hexanediol diacrylate, tetraethylene glycol diacrylate, di(trimethylolpropane) tetraacrylate, pentaerythritol tetraacrylate and tripropylene glycol diacrylate;
and the tertiary amine curing catalyst comprises TMG, DABCO or a combination thereof, preferably, the tertiary amine curing catalyst comprises 1,1,3,3-tetramethylguanidine (TMG), more preferably is TMG.

More preferably, the one or more acetoacetate ester compounds to be used in the methods of the invention are independently selected from the group consisting of trimethylolpropane triacetoacetate, glycerol triacetoacetate and ethylene glycol bisacetoacetate; the one or more acrylate compounds are independently selected from the group consisting of trimethylolpropane triacrylate, di(trimethylolpropane) tetraacrylate and tripropylene glycol diacrylate, trimethylolpropane triacrylate; and the tertiary amine curing catalyst comprises TMG, DABCO or a combination thereof, preferably, the amine curing catalyst comprises TMG, most preferably is 1,1,3,3-tetramethylguanidine.

Most preferably, the one or more acetoacetate ester compounds are independently selected from the group consisting of trimethylolpropane triacetoacetate, glycerol triacetoacetate and ethylene glycol bisacetoacetate; the acrylate compound is trimethylolpropane triacrylate; and the tertiary amine curing catalyst is 1,1,3,3-tetramethylguanidine.

In an particular embodiment,
the acetoacetate ester compound comprises trimethylolpropane triacetoacetate or glycerol triacetoacetate;
the acrylate compound comprises trimethylolpropane triacrylate; and
the amine curing catalyst comprises TMG, DABCO or a combination thereof, preferably, the amine curing catalyst comprises TMG.

In a another particular embodiment,

the acetoacetate ester compound comprises trimethylolpropane triacetoacetate;

the acrylate compound comprises trimethylolpropane triacrylate; and

the amine curing catalyst comprises TMG, DABCO or a combination thereof, preferably, the amine curing catalyst comprises TMG.

In another particular embodiment,

the acetoacetate ester compound comprises glycerol triacetoacetate;

the acrylate compound comprises trimethylolpropane triacrylate; and

the amine curing catalyst comprises TMG, DABCO or a combination thereof, preferably, the amine curing catalyst comprises TMG.

The functional group ratio (FGR) of the functional groups of the one or more acetoacetate ester compounds and of the one or more acrylate compounds (AA/ACR) may vary, depending on the molar ratio of the acetoacetate ester compounds and the acrylate compounds as well as the number of functional groups in each compound comprised in the resin formulation. The functional group ratio of a resin formulation may be calculated using the following formula:

$$\text{Functional group ratio} = (n \text{ [mol] acetoacetate}) \times (\text{number functional groups acetoacetate}) / (n \text{ [mol] acrylate}) \times (\text{number functional groups acrylate})$$

The calculation of functional group ratios (FGRs) for specific acetoacetate ester compound and acrylate compound ratios is further exemplified in the table 1 below.

**Table 1: Functional group ratios of exemplary resin formulations.**

| Acetoacetate compound | | Acrylate compound | | | |
|---|---|---|---|---|---|
| N functional groups | n [mol] | N funct. groups | n [mol] | Mol Ratio | Funct. group ratio **(AA/ACR)** |
| 2 | 1 | 2 | 1 | 1:1 | 1 |
| 2 | 1 | 2 | 2 | 1:2 | 0.5 |
| 3 | 1 | 3 | 1 | 1:1 | 1 |
| 3 | 1 | 3 | 2 | 1:2 | 0.5 |
| 3 | 1 | 2 | 1 | 1:1 | 1.5 |
| 3 | 1 | 2 | 3 | 1:3 | 0.5 |
| 3 | 2 | 4 | 3 | 2:3 | 0.5 |

In a preferred embodiment of the invention, the functional group ratio (FGRs) of the acetoacetate ester functional groups and the acrylate functional groups (AA/ACR) is from 0.15 to 1.50, preferably from 0.2 to 1.25, more preferably, from 0.25 to 0.95, even more preferably, from 0.25 to 0.85, especially, from 0.3 to 0.85, more especially from 0.3 to 0.75, more especially from 0.3 to 0.70, even more especially from 0.3 to 0.65, most especially from 0.3 to 0.6, specifically from 0.3 to 0.55, more specifically from 0.3 to 0.5.

In a particularly advantageous embodiment of the present invention,

the one or more acetoacetate ester compounds to be used in the methods of the invention the invention are independently selected from the group consisting of cyclohexanedimethanol diacetoacetate, glycerol triacetoacetate, neopentyl glycol diacetoacetate, ethylene glycol diacetoacetate, trimethylolpropane triacetoacetate, pentaerythritol tetraacetoacetate, acetoacetylated polyvinyl alcohols and acetoacetylated polyester resins;

the one or more acrylate compounds are independently selected from the group consisting of pentaerythritol triacrylate, trimethylolpropane triacrylate, 1,6-hexanediol diacrylate, tetraethylene glycol diacrylate, di(trimethylolpropane) tetraacrylate, pentaerythritol tetraacrylate and tripropylene glycol diacrylate, the functional group ratio of the acetoacetate ester functional groups and the acrylate functional groups is from 0.3 to 0.75; and

the tertiary amine curing catalyst comprises TMG, DABCO or a combination thereof, preferably, the amine curing catalyst comprises TMG, most preferably is 1,1,3,3-tetramethylguanidine.

More preferably, the one or more acetoacetate ester compounds are independently selected from the group consisting of trimethylolpropane triacetoacetate, glycerol triacetoacetate and ethyleneglycol diacetoacetate, the one or more acrylate compounds are independently selected from the group consisting of trimethylolpropane triacrylate, di(trimethylolpropane) tetraacrylate and tripropylene glycol diacrylate, the functional group ratio of the acetoacetate ester functional groups and the acrylate functional groups is from 0.3 to 0.75, and the tertiary amine curing catalyst is 1,1,3,3-tetramethylguanidine.

Most preferably, the one or more acetoacetate ester compounds are independently selected from the group consisting of trimethylolpropane triacetoacetate, glycerol triacetoacetate and ethylene glycol bisacetoacetate, the acrylate compound is trimethylolpropane triacrylate, the functional group ratio of the acetoacetate ester functional groups and the acrylate functional groups is from 0.3 to 0.75, and the tertiary amine curing catalyst is 1,1,3,3-tetramethylguanidine.

In a more especial embodiment,

the one or more acetoacetate ester compounds are independently selected from the group consisting of trimethylolpropane triacetoacetate, glycerol triacetoacetate and ethylene glycol diacetoacetate;

the one ore more acrylate compounds are independently selected from the group consisting of tripropylene glycol diacrylate, trimethylolpropane triacrylate and di(trimethylolpropane) tetraacrylate; the amine catalyst comprises TMG, DABCO or a combination thereof, preferably, the amine catalyst comprises TMG; and

the functional group ratio is from 0.3 to 0.75.

In an especial embodiment,

the acetoacetate ester compound comprises trimethylolpropane triacetoacetate or glycerol triacetoacetate;

the acrylate compound comprises trimethylolpropane triacrylate;

the amine curing catalyst comprises TMG, DABCO or a combination thereof, preferably, the amine curing catalyst comprises TMG; and

the functional group ratio is from 0.3 to 0.75.

In a particular embodiment,

the acetoacetate ester compound comprises trimethylolpropane triacetoacetate;

the acrylate compound comprises trimethylolpropane triacrylate;

the amine curing catalyst comprises TMG, DABCO or a combination thereof, preferably, the amine curing catalyst comprises TMG; and

the functional group ratio is from 0.3 to 0.75.

In another particular embodiment,

the acetoacetate ester compound comprises glycerol triacetoacetate;

the acrylate compound comprises trimethylolpropane triacrylate;

the amine catalyst comprises TMG, DABCO or a combination thereof, preferably, the amine catalyst comprises TMG; and the functional group ratio is from 0.3 to 0.75.

The inventors have surprisingly found that the use of such resin formulations in the method of preparing a foundry shape according to the invention that have the abovementioned ranges of functional group ratios of the acetoacetate ester functional groups and the acrylate functional groups provides superior mechanical properties of the resulting foundry shape. In particular, the strength and/or hardness of the foundry shape after curing was found to be superior when using resin formulations with the abovementioned functional group ratios.

The foundry aggregate for use in a method of preparing a foundry shape according to the invention is preferably sand. The sand for use according to the method of the invention may be any sand that is suitable for use as a foundry aggregate. Examples include silica sand, olivine sand, chromite sand, zircon sand, chamotte sand. The sand may comprise minor amounts of staurolite, graphite or coal, clay, talc, iron oxides, titanium oxides and/or anthracite. The clay may be kaolin and/or bentonite. The sand may further comprise cushioning material such as wood flour, saw dust, powdered husks, peat, and straw and/or cereal binders such as dextrin, starch, sulphite lye, and molasses.

The amount of the resin formulation relative to the amount of the foundry aggregate (i.e., sand) in the foundry mix may vary depending on the desired application, but is generally from 0.5% (w/w) to 15% (w/w), preferably from 1% (w/w) to 12.5% (w/w), more preferably from 2% (w/w) to 10% (w/w), especially from 1% (w/w) to 10% (w/w), more especially from 1% (w/w) to 2% (w/w), most especially from 0.5% (w/w) to 3% (w/w).

In both, the method of preparing a foundry shape of the invention and in the method for preparation of fiber reinforced parts of the invention , the one or more acetoacetate ester compounds and/or the one or more acrylate compounds may be dissolved in a suitable non-aqueous solvent prior to mixing with each other, or with the foundry aggregate, respectively. Suitable non-aqueous solvents are known to the skilled person and include, for example, acetone, ethyl acetate and alcohols, such as methanol, ethanol, butanol, isopropanol, and the like. If solvents are used in the method of the invention, the solvents may be evaporated from the foundry mix, the resin composition or from the fiber resin composition prior to curing.

Preferably, the one or more acetoacetate ester compounds and the one or more acrylate compounds are liquid at room temperature, and therefore, no solvent is required for mixing.

For example, residual solvent remaining in the foundry shape during or after curing may reduce the hardness or tensile strength of the resulting mold and/or core and/or fiber resin composition. It is therefore desirable to use resin formulations and binder systems that do not necessitate the use of solvents.

In a preferred embodiment, the resin formulation used in the methods of the invention is essentially free of solvent (and hence, e.g., also the foundry mix).

Preferably, in the method for preparation of fiber reinforced parts of the invention the amine curing catalyst is liquid at room temperature.

Preferably, in the method for preparation of fiber reinforced parts of the invention the resin composition is liquid at room temperature.

Preferably, the resin composition and the fiber resin composition are essentially free of solvent.

Preferably, no solvent is used for the preparation of the fiber reinforced parts.

In particular, the acetoacetate ester compound and the acrylate compound, preferably also the amine curing catalyst, are liquid at room temperature, the resin composition and the fiber resin composition are essentially free of solvent, and no solvent is used for the preparation of the resin composition or of the fiber resin composition.

The viscosity of constituents of the resin formulation or of the resin composition itself may need to be decreased. This can be achieved by using reactive thinners that can participate in the curing reaction through reactive centers so that they are incorporated, or by thinners that are consumed during the curing reaction. Therefore, these thinners have only a minor, or essentially no impact on the hardness or strength of the resulting mold and/or core and/or of the resulting fiber reinforced part (FRP).

Suitable thinners are known to the person skilled in the art and are in general low viscosity liquids..

The cured resin composition of the invention possesses a high degree of hardness and tensile strength. Generally, the hardness of the fully cured resin is at least 70 shore A, at least 75 shore A, at least 80 shore A, at least 85 shore A, at least 90 shore A or at least 95 shore A. Preferably, the hardness of the cured resin composition is from 85 shore A to 100 shore A, more preferably from 90 shore A to 100 shore A and most preferably from 95 shore A to 100 shore A. Hardness of the cured neat resin corresponds to the tensile strength of a foundry shape produced using the same binder system.

The method of preparing a foundry shape of the invention provides various advantages over the known processes for producing foundry shapes. In contrast to methods that employ common binder systems such as isocyanate/formaldehyde based binder systems, the method of the invention utilizes a binder system that does not comprise known carcinogenic compounds and is thus less toxic to the environment as well as to the workers.

In the method for preparation of fiber reinforced parts, preferably, the acetoacetate ester compound, the acrylate compound and the amine curing catalyst are in a first step mixed to provide the resin composition. The mixing can be done in any order:

in one embodiment (embodiment A) at first the acrylate compound is premixed with the amine curing catalyst to provide a premix (premix A), then premix A is mixed with the acetoacetate ester compound to provide the resin composition, then the contacting with the fiber of step (a) is done;

in another embodiment (embodiment B) at first the acetoacetate ester compound is premixed with the amine curing catalyst to provide a premix (premix B), then premix B is mixed with the acrylate compound to provide the resin composition, then the contacting with the fiber of step (a) is done;

in another embodiment (embodiment C) at first the acetoacetate ester compound is premixed with the acrylate compound to provide a premix (premix C), then premix C is mixed with the amine curing catalyst to provide the resin composition, then the contacting with the fiber of step (a) is done.

Preferred order of mixing are embodiment A and embodiment B, more preferably embodiment A.

In the method for preparation fiber reinforced parts, the fiber may be a pre-shaped fiber or pre-shaped fiber reinforcement material. The fiber may be any fiber type and may be selected from one or more of the material such as carbon, glass, aramide, polyester, polyolefin, nylon, natural fibers (such as flax, hemp or sisal), basalt, steel, aluminum, copper, zinc. The fiber may be chopped or continuous, random or oriented, woven or non-woven, knitted or non-knitted or braided according to the requirements of any of various different portions of the desired structure of the fiber reinforced part.

The pre-shaped form of the fiber may be selected in view of the desired form of the fiber reinforced parts (FRP), the fiber may have the form of a sheet, mat, bead, strand, thread, band, web, rovings, band of rovings, bundle, or the like.

Suitable fibers may include, for example, numerous materials known to the skilled of the art, among which are such commercially available materials as E glass fibers, S glass fibers, graphite fibers, aramid fibers (including KEVLAR (trademark)) and the like.

Fiber content in fiber resin composition or in the fiber reinforced parts typically is in the range of up to 50 or even up to 80 wt% of the total weight of the fiber resin composition or of the fiber reinforced part respectively, in another embodiment, the content of the fiber may vary from 0.1 to 50 or even to 80 wt%, or from 1 to 50 or even to 80 wt%, or from 5 to 50 or even to 80 wt%, or from 10 to 50 or even to 80 wt%, or from 20 wt% to 50 or even to 80 wt% of the total weight of the fiber resin composition or of the fiber reinforced part respectively.

In the method for preparation fiber reinforced parts, the mixing of the components of the resin composition to provide said resin composition can be done at various temperatures, such as from 0 to 50 °C, preferably from 0 to 40 °C; more preferably from 0 to 30 °C, even more preferably from 5 to 30 °C, especially from 5 °C to room temperature.Other temperatures are also possible, for example from -20 to 80 °C, or from -10 to 70 °C, or from -5 to 70 °C, or from -5 to 40 °C, or from -5 to 30°C.

The contacting of the resin composition with fiber to provide the fiber resin composition can be done at various temperatures, such as from 0 to 50 °C, preferably from 0 to 40 °C; more preferably from 0 to 30 °C, even more preferably from 5 to 30 °C, especially from 5 °C to room temperature.

In one embodiment of the method for preparation fiber reinforced parts of the invention, the resin composition is degassed before it is contacted with the fiber. Degassing is preferably done by applying vacuum to the resin composition. The vacuum that is applied to the resin composition is preferably below 50 mbar, more preferably below 30 mbar, even more preferably below 10 mbar.

The curing of the fiber resin composition to provide the fiber reinforced part (FRP) may be done in a wide range of temperatures, such as a temperature of from 0 to 200 °C, preferably from 0 to 160 °C, more preferably from 0 to 140 °C, even more preferably of from 5 to 140°C, especially of from 5 to 130 °C, more especially of from 5 to 120 °C, even more especially of from 5 to 110 °C.

The time of the curing of the fiber resin composition to provide the fiber reinforced part (FRP) depends on various parameters, such as the temperature which is chosen for curing, the amount and the type of the resin composition in the fiber resin composition which needs to be cured, the amount and the type of the amine curing catalyst, therefore the time for curing can vary in a wide range, such as from 5 sec to 48 h, or 5 sec to 24 h, or from 5 sec to 16 h.

The method for preparation fiber reinforced parts as defined herein can be a Resin Transfer Molding (RTM) process, a Vacuum Infusion (VACINF) process, Continuous Filament Impregnation (CONTFILIMP) process, a Filament Winding (FILWIN) process, a Wet Compression Molding (WCM) process, or a Pultrusion (PULTR) process.

Any said degassing is preferably done in case of the method being a resin transfer molding process (RTM) or a Vacuum Infusion process (VACINF).

Resin transfer molding (RTM) is a closed mold, low pressure process applicable to the fabrication of complex high performance composite articles of both large and small size. Resin transfer molding requires a relatively (compared for example to infusion technology) high investment for equipment, but it is more economically efficient for higher production volumes (several thousands to several ten thousands parts per year compared to infusion technology). Several different resin transfer molding processes are well known to the skilled of the art. The process is differentiated from various other molding processes in that reinforcement material fiber, such as fiberglass or other fiber reinforcement material, is placed separately into a molding tool cavity and then combined with resin within the mold cavity to form a fiber reinforced part (FRP) composite product.

Typically, a pre-shaped fiber or fiber reinforcement material is positioned within a molding tool cavity and the molding tool is then closed. A feed line connects the closed molding tool cavity with a supply of liquid resin composition and the resin composition is pumped or pressed or "transferred" into the tool cavity where it impregnates and envelops the fiber reinforcement material and subsequently cures. The curing can be done at elevated temperatures. The cured or semi-cured fiber reinforced part product then is removed from the molding tool cavity. It should be understood that as used herein, the term resin transfer molding and resin transfer molding refer to any molding process wherein a fiber reinforcement material or structure is positioned within a mold into which resin is subsequently introduced. Thus, variations such as so-called press molding or squeeze molding and the like are within the scope of such terms.

Another variant of resin transfer molding, often referred to as structural reaction injection molding, uses a highly reactive resin system comprising two components pumped from separate holding tanks under relatively high pressure into a mixing chamber, e.g. an impingement mixing chamber, and from there directly into the molding tool cavity. The tooling typically comprises a metallic shell to facilitate heat transfer. Although the mixing pressure is high, the overall pressure of the resin in the molding tool typically is only about 10 to 150 psi (ca. 0.7 to 10.3 bar).

The resin composition flows into the molding tool cavity and wets-out the fiber reinforcement material as the curing reaction is occurring.

Typically, the fiber reinforcement material can be used in amounts up to from 20 to 50 wt% of the fiber plus resin composite, i.e. of the fiber resin composition. Due to the desired rapid resin cure, flow distances are limited and for longer flow distances, multiple inlet ports may be required.

Another variant of resin transfer molding, referred to generally as high speed resin transfer molding, is particularly suitable for commercial production of products requiring a 3-dimensional preform comprising a core, with attachment inserts, etc. as required, and fiber reinforcement material over all or selected portions of the surface of the core. Fiber content typically is in the range of up to from 35 to 65 wt% and may be a mixture of both continuous fiber (random and/or oriented) and chopped random material. Tooling for high production volumes typically comprises steel in order to contain moderate molding pressures of 100 to 500 psi (ca. 6.9 to 34.5 bar) and for good heat transfer characteristics. For more limited production requirements, aluminum or zinc tooling may be acceptable. Typically, molding is carried out at elevated temperatures to reduce the cure time. The fiber preform is positioned within the mold, the mold is closed and resin is injected. At higher reinforcement levels, that is, at higher fiber weight content, the mold may be left slightly opened during resin injection to promote more rapid filling of the molding cavity; the mold cavity would then be fully closed.

Preferably, the curing of the resin composition is accomplished in the mold such that the product will require no post-bake (post curing) cycle and will have an acceptable dimensional stability. For complex components or components having critical tolerance requirements, a fixtured post-curing may be required for adequate dimensional stability. Typically, cycle times range from about 1 min to about 4 min for small components, and from about 8 min to about 12 min or longer for large, complex structures.

In view of the fact that resin transfer molding processes allow placement of fiber reinforcement materials, containing any of the various available fiber types or combinations thereof, in the mold cavity with minimal subsequent movement of the reinforcement during injection of the resin composition, the fiber reinforcement material can be designed for optimum performance at minimum weight. That is, the fiber reinforcement material can be designed and assembled with the most appropriate fiber type (glass, graphite, aramid, etc.), either chopped or continuous, random or oriented, in each of the various different portions of the reinforcement structure. Again, this yields a product of more optimum performance at reduced weight. Also, the low pressure required for the low resin injection pressures which are used allows the use of less expensive presses and the use of tooling somewhat less costly than that employed in high volume compression molding or thermoplastic stamping processes. Furthermore, there is the opportunity for significant tooling expense reduction, when compared to steel components for example, where a significant degree of sub-part integration is achieved. In addition, the low pressures employed in resin transfer molding processes enables much larger structures to be molded, since current compression molding processes are limited by the availability of sufficiently large presses.

A significant advantage of the resin transfer molding processes is the ability to incorporate cores and inserts into the product design. That is, in addition to the fiber reinforcement material, hollow cores or foam cores, for example, so-called structural foam cores, or the like can be incorporated into a fiber reinforcement material preform which is positioned within the mold cavity prior to introducing the resin. Typically, the fiber reinforcement material is wound onto the core or otherwise attached to the surface thereof. As used herein, the term preform refers to a reinforcement structure which is adapted to be placed in an resin transfer molding tool cavity and which comprises a core, in one or more segments, and fiber reinforcement material on the outer surface of the core. Inserts, such as metal devices to serve as attachment means for assembly of the fiber reinforced part product with other structures, and a wide variety of other devices can be incorporated into the preform. The incorporation of cores, including, for example, structural and semi-structural foam cores and removable cores, enables a great deal of control over the strength, weight and other physical properties of the fiber reinforced part product. It enables the fabrication of 3-dimensional structures with, for example, deep sections discontinuous contours and other configuration complexities.

According to another embodiment of the invention, a resin transfer molding process comprises positioning the fiber in the cavity of a resin transfer molding tool, closing the molding tool on the fiber, then the resin composition is introduced into the molding tool cavity providing fiber resin composition, and then curing fiber resin composition to provide the fiber reinforced part.

By the introduction of the resin composition into the molding tool cavity the fiber is contacted with said resin composition, said contacting is an impregnation of the fiber with said resin composition.

In some instances a vacuum then is applied to the molding tool cavity after closing the mold to extract air therefrom. Resin composition may be injected into the mold at low pressure, often below atmospheric pressure. It is one advantage of resin transfer molding processes that the low pressures involved enable the use of low cost molding tool materials, such as epoxy and the like. The low pressures, however, result in low rates of resin composition flow into the molding tool cavity. As noted above, however, a primary benefit of the process is the ability to fabricate large, complex structures with a maximum of part integration at a relatively low cost.

Further economically advantages are gained when applying higher pressure rates, that the mold filling times with the resin composition becomes much shorter and so it does with the overall cycle time. The higher pressures above ambient pressure is only possible with the use of a closed, rigid, metal mold, as the vacuum infusion process with a flexible foil as mold closure can only work up to pressure below ambient pressure.

The vacuum assisted resin transfer molding (VARTM) and can be viewed as a subset of resin transfer molding. In addition to the injection of the resin, the resin flow is accelerated by applying a vacuum.

Suitable cores according to the present invention can comprise any of the numerous core materials known to those skilled person and may include, for example, any of the various cores mentioned above. Thus, for example, structural and semi-structural foam can be molded in a suitable molding tool to form a core having the desired configuration. While the selection of suitable foam material will depend largely on the application for which the core and the ultimate fiber reinforced part product are intended, generally preferred in view of its favorable costs and good physical properties are any of the numerous commercially available polyurethane foams. It will be understood, however, that suitable cores also can comprise any of numerous alternative materials. Thus, for example, a suitable core may comprise a formed metal or plastic sheet or screen having the desired configuration. In appropriate applications one or more segments or the entire core may be removable from the fiber reinforced part product following the molding processing. Thus, for example, where it is desired to render a certain portion of the fiber reinforced part product more readily crushable (i.e., less strong in the sense of being more readily crushable) than another portion of the fiber reinforced part product, the core from the former portion of the fiber reinforced part product may be removed. Suitable cores also include pressurized bladders, which optionally are deflatable and removable, and other types of mandrels, the primary consideration being that it act as a support for the fibrous reinforcement material during the resin transfer molding process. Additionally, as used herein, it will be understood that the core onto which the continuous oriented fibers are wound, wrapped, woven, knitted, etc. may already comprise fibrous reinforcement material, either in the same section being overwrapped with the continuous oriented fibers and/or in different sections thereof.

The resin transfer molding process is designed for high output, that is short cycle time, part manufacturing under repetitive conditions, with limited tolerances concerning all process parameters, e.g. such as viscosity, mixing ratio, permeability of the reinforcement, gel time, cycle time and so on.

Desired characteristics of the resin composition used in resin transfer molding:

- it should have a low viscosity at the temperature at which it is held in the reservoir prior to injection and at impregnation, this facilitates e.g. efficient injection and adequate fiber wetting,
- it should impregnate the fiber preform quickly and uniformly without voids,
- it should gel quickly once impregnation occurs to achieve short cycle times,
- it should possess sufficient hardness to be demolded without distortion.

Vacuum Infusion (VACINF) works only with the pressure difference of the ambient pressure and the vacuum applied. In vacuum Infusion liquid the resin composition is filled into a mold cavity, in which an insert of the fiber has been placed in advance, and where a vacuum is generated in the mold cavity hereby drawing in the polymer.

In one type of liquid composite molding (LCM) in form of vacuum Infusion, one of the mold halves is a flexible bag or sheet known as a vacuum bag, this embodiment may be called vacuum bagging. Vacuum bagging has the advantage of providing high fiber to resin composition ratios to maximize strength while minimizing weight and resin cost as well as allowing molding of back drafts and similar features that cannot be molded with rigid tooling.

In comparison vacuum Infusion does not achieve the same high fiber weight or fiber volume content for the fiber reinforced part as when manufactured by resin transfer molding. Vacuum Infusion is the process to select for small to mid-size production rated (up to ca. 1000 parts molded).

In one embodiment of Vacuum Infusion, the method comprises the steps of (a) providing a first mold part, (b) placing the fiber on the inner surface of the first mold part, (c) providing a second mold part, said second mold part being flexible, such as in form of a vacuum bag, or said second mold part including at least one flexible portion or vacuum bag and at least one rigid portion, (d) placing the second mold over the fiber on the first mold part, (e) reducing the pressure, i.e. applying vacuum, in the space between the molds parts, (f) injecting or sucking the resin composition into said space, thereby providing the fiber resin composition, and (g) curing the said fiber resin composition.

The flexible portion or the vacuum bag has an inner surface having the shape of all or part of the one of the surfaces surface of the object being molded. The vacuum bag is located where the advantages of vacuum bagging are desired. Thus, the vacuum bag is used to mold back drafts and similar features that cannot be molded with a rigid mold. Any number of rigid and flexible portions can be employed.

In one embodiment, Vacuum Infusion is a process used for molding fiber composite moldings, where uniformly distributed fibers are layered in one of the mold parts, said fibers may be rovings, i.e. bundles of fiber bands, bands of rovings or mats, which are either felt mats made of single fibers or woven mats made of fiber rovings. The second mold part, which is often made of a vacuum bag, is subsequently placed on top of the fiber material. By generating a vacuum, typically 80 to 90% of the total vacuum, in the mold cavity between the inner side of the mold part and the vacuum bag, the liquid resin composition can be drawn in or sucked in and fill the mold cavity with the fiber material contained therein. So-called distribution layers and distribution tubes, also called inlet channels, may be used between the vacuum bag and the fiber material in order to obtain as sound and efficient a distribution of the resin composition as possible. Often the fiber is based on glass fibers or carbon fibers.

During the process of filling the mold, a vacuum is generated by vacuum channels in the mold cavity, said vacuum in this connection being understood as a negative pressure, whereby the liquid resin composition is drawn into or sucked into the mold cavity via the inlet channels in order to fill said mold cavity. From the inlet channels the resin composition disperses in the mold cavity as a flow front moves towards the vacuum channels.

In connection with producing relatively thick fiber reinforced part by means of vacuum Infusion, it is known to place intermediate distribution layers or flow layers inside the fiber insertion, so that the liquid resin composition can flow into the fiber insertion through said distribution layers or flow layers and spread perpendicularly into the fiber material FIB. Semi-permeable membranes may be used for distributing the vacuum pressure. The term semi-permeable membrane is understood as a membrane, which is permeable to gases but impermeable to the liquid resin composition.

Desired characteristic of the resin composition used in vacuum Infusion:

- it should have a low viscosity at the temperature which it is held in the reservoir prior to infusion, this facilitates e.g. efficient infusion and adequate fiber wetting
- it should impregnate the fiber preform quickly and uniformly without voids
- it should gel quickly once impregnation is complete, that is once the fiber is completely saturated, to achieve short cycle times
- it should possess sufficient hardness to be demolded without distortion

The Continuous Filament Impregnation (CONTFILIMP) process is a process for impregnating fibers in form of a continuous fiber or continuous fiber bundle with a liquid resin composition for producing fiber reinforced part in form of reinforced continuous fiber or continuous fiber bundle.

One embodiment of Continuous Filament Impregnation is conveyance of the fiber through a so-called crosshead-die, in which liquid resin composition is made to enter into the fiber travelling through the nozzle chamber, preferably at elevated pressure. The fiber can be so guided to pass across a nozzle aperture that liquid resin composition flows from the nozzle from elevated pressure transversely through the fiber to lower pressure.

This can be realized by guiding the fiber to pass across the aperture of a nozzle head, from which liquid resin composition at elevated pressure runs out. The fiber to be impregnated may hereby be at atmospheric pressure or, if desired, at a lower pressure, in any case at a lower pressure than the elevated pressure at which the liquid resin composition runs out of the nozzle head. In one embodiment, the nozzle head is located in a chamber which contains molten resin, through which the fiber to be impregnated flow. A lower pressure is then prevalent in the chamber than in the nozzle through which the liquid resin composition flows out.

In another embodiment, the fiber is contacted, that is impregnated with the resin composition by passing the fiber through the resin composition, for example through a bath of resin composition.

The fiber reinforced part to be produced in the Continuous Filament Impregnation process may be a continuous tape which can be used for pultrusion, etc.

The shaping in case of Continuous Filament Impregnation may be passively or automatically realized by the structure and shape of the fiber itself, which are preserved during the contacting and provide the form and shape of the cured fiber resin composition, the fiber reinforced part.

The Filament Winding (FILWIN) process can be viewed as one embodiment of Continuous Filament Impregnation. In Filament Winding the fiber in form of filaments, fibers or fiber bundles and the like, are contacted, that is impregnated, with the resin composition providing the fiber resin composition, then they are wound about a form or mandrel of a shape generally corresponding to the required shape of the finished fiber reinforced part article, preferably in a plurality of overlying layers of fiber, and then after the winding the wound the fiber resin composition is cured.

The contacting of the fiber with the resin composition can be done by any methods known to the skilled person, for example such as described herein for Continuous Filament Impregnation.

In one embodiment, the winding of the fiber about the form or mandrel is achieved by a rotation of the form or mandrel relative to the fiber, such form or mandrel rotation being provided by the rotation of a shaft on which the form or mandrel is mounted.

In one embodiment, the fibre resin composition wound about the form or mandrel is cured while still being attached to the form or mandrel. The form or mandrel may be removed from the wound fiber resin composition after curing; or the form or mandrel is not removed from the cured resin composition.

The winding around the form of mandrel can be done by any method known to the skilled person, for example in the case of the manufacture of an elongate fiber reinforced part article, such as an airfoil by such Filament Winding techniques, as the fiber is wound around the form, the form and the fiber may be reciprocally displaced relative to one another along the form's longitudinal or winding axis, thereby forming a plurality of layers of fiber, the fiber of each layer being angularly offset from the longitudinal and transverse axes of the form as well as from fiber filaments of adjacent layers.

In another embodiment, the fiber is hoop wound and/or helical wound.

In Wet Compression Molding (WCM) process the fiber in form of a sheet or the like is place onto or into the female part of a mold, then the fiber is contacted, that is impregnated with resin composition to provide fiber resin composition in the female part of the mold, then the mold is closed by placing, preferably pressing the male part of the mold onto the resin composition and into the female part of mold, thereby fiber resin composition is shaped. Then fiber resin composition is cured in the closed mold, preferably the curing is done at elevated temperature, which may be realized by heating the mold. After curing the desired fiber reinforced part article is then removed from the mold.

In one embodiment the fiber is made out of one layer of fiber, preferably in form of a sheet or mats, in another embodiment one or more additional layers of fiber are placed successively onto the first layer of fiber and on top of each other. The contacting, that is the impregnating of the layers of fiber may be done successively after the placement of each layer, so the steps of placing the fiber and impregnating the fiber are done alternatingly.

Wet Compression Molding may be used to produce for example fiber reinforced part articles such as automotive articles. The advantage of Wet Compression Molding is its ability to mold large, fairly intricate parts. Also, it is one of the lowest cost molding methods compared with other molding methods such as transfer molding and injection molding; moreover it wastes relatively little material, giving it an advantage when working with expensive compounds. This method of molding is largely used in manufacturing automotive parts such as hoods, fenders, scoops, spoilers, as well as smaller more intricate parts.

The pultrusion (PULTR) process is a continuous process for producing composite articles of fiber-reinforced thermosetting resins, in which a continuous fiber in roving or mat state or a composite structure thereof is impregnated with the resin composition, and the resulting resin composition is introduced into a die for shaping and setting or curing having a passage of the ultimate product shape thereby to shape and set or cure the same to provide a fiber reinforced part. The die may be heated.

For increasing the production speed in pultrusion, the temperature of the die can be elevated or the length of the die can be elongated. The application of both measures has its limits, as for example there can be foaming or early setting of only the outermost layer contacting the die can happen, the latter resulting in a great viscosity gradient between the outer layer and the inner layer which leads to high internal stress in the product, all of which is detrimental to the performance of the process. Furthermore, the contact of the resin against the inner surface of the die due to thermal expansion of the resin induced by the heating increases the resistance to pultrusion and increases the required force to pull the material through the die. For these reasons the length of the die is practically limited.

As a consequence, the present state of the art in pultrusion is such that it is being practiced at a production rate which is slower than that practiced in general extrusion of thermoplastic resins.

Advantageously the resin composition is fast setting or fast curing, preferably already at lower temperatures, preferably already at ambient temperature. Furthermore it is desirable that the resin composition has initially, that is before setting or curing sets in, a low viscosity.

*Binder systems (Resin compositions) of the invention*

The present invention also relates to a binder system comprising one or more acetoacetate ester compounds, one or more acrylate compounds and a tertiary amine curing catalyst. The binder system of the invention exhibits the following beneficial properties:

- good hardness [Shore A] after curing
- good resistance of the cured resin against solvents
- good tensile strength of the neat resin
- short curing times (reflected by gel time)
- low amounts of tertiary amine curing catalyst required
- good resistance to corrosion
- good chemical resistance
- cost savings and fast production times

The binder system of the invention is composed as defined for the methods of the invention herein, also with all their embodiments.

For example, in one embodiment, the one or more acetoacetate ester compound comprises glycerol triacetoacetate and/or trimethylolpropane triacetoacetate and/or ethylene glycol diacetoacetate, the one or more acrylate compound comprises trimethylolpropane triacrylate, and the tertiary amine curing catalyst may be selected from the group consisting of 1,1,3,3-tetramethylguanidine (TMG) and 1,4-diazabicyclo[2.2.2]octane (DABCO).

In one embodiment, the one or more acetoacetate ester compound comprises glycerol triacetoacetate, the one or more acrylate compound comprises trimethylolpropane triacrylate, and the tertiary amine curing catalyst is selected from the group consisting of TMG and DABCO.

In a specific embodiment, the one or more acetoacetate ester compound comprises glycerol triacetoacetate, the one or more acrylate compound comprises trimethylolpropane triacrylate and the tertiary amine curing catalyst is TMG.

In another specific embodiment, the one or more acetoacetate ester compound comprises glycerol triacetoacetate, the one or more acrylate compound comprises trimethylolpropane triacrylate and the tertiary amine curing catalyst is DABCO.

In a more specific embodiment, the acetoacetate ester compound is glycerol triacetoacetate, the acrylate compound is trimethylolpropane triacrylate and the tertiary amine curing catalyst is TMG.

In another more specific embodiment, the acetoacetate ester compound is glycerol triacetoacetate, the acrylate compound is trimethylolpropane triacrylate and the tertiary amine curing catalyst is DABCO.

In one embodiment, the one or more acetoacetate ester compound comprises trimethylolpropane triacetoacetate, the one or more acrylate compounds comprises trimethylolpropane triacrylate, and the tertiary amine curing catalyst is selected from the group consisting of TMG and DABCO.

In a specific embodiment, the one or more acetoacetate ester compound comprises trimethylolpropane triacetoacetate, the one or more acrylate compound comprises trimethylolpropane triacrylate and the tertiary amine curing catalyst is TMG.

In another specific embodiment, the one or more acetoacetate ester compound comprises trimethylolpropane triacetoacetate, the one or more acrylate compound comprises trimethylolpropane triacrylate and the tertiary amine curing catalyst is DABCO.

In a more specific embodiment, the acetoacetate ester compound is trimethylolpropane triacetoacetate, the acrylate compound is trimethylolpropane triacrylate and the tertiary amine curing catalyst is TMG.

In another more specific embodiment, the acetoacetate ester compound is trimethylolpropane triacetoacetate, the acrylate compound is trimethylolpropane triacrylate and the tertiary amine curing catalyst is DABCO.

In one embodiment, the one or more acetoacetate ester compound comprises ethylene glycol diacetoacetate, the one or more acrylate compounds comprises trimethylolpropane triacrylate, and the tertiary amine curing catalyst is selected from the group consisting of TMG and DABCO.

In a specific embodiment, the one or more acetoacetate ester compound comprises ethylene glycol diacetoacetate, the one or more acrylate compound comprises trimethylolpropane triacrylate and the tertiary amine curing catalyst is TMG.

In another specific embodiment, the one or more acetoacetate ester compound comprises ethylene glycol diacetoacetate, the one or more acrylate compound comprises trimethylolpropane triacrylate and the tertiary amine curing catalyst is DABCO.

In a more specific embodiment, the acetoacetate ester compound is ethylene glycol diacetoacetate, the acrylate compound is trimethylolpropane triacrylate and the tertiary amine curing catalyst is TMG.

In another more specific embodiment, the acetoacetate ester compound is ethylene glycol diacetoacetate, the acrylate compound is trimethylolpropane triacrylate and the tertiary amine curing catalyst is DABCO.

In one embodiment, the one or more acetoacetate ester compound comprises isosorbide diacetoacetate, the one or more acrylate compound comprises is trimethylolpropane triacrylate and the tertiary amine curing catalyst is 1,1,3,3-tetramethylguanidine (TMG).

In a specific embodiment, the acetoacetate ester compound is isosorbide diacetoacetate, the acrylate compound is trimethylolpropane triacrylate and the tertiary amine curing catalyst is TMG.

In one embodiment, the one or more acetoacetate ester compound comprises 4,8-bis(hydroxymethyl)tricyclo[5.2.1.0$^{2,6}$]decane diacetoacetate, the one or more acrylate compound comprises trimethylolpropane triacrylate and the tertiary amine curing catalyst is 1,1,3,3-tetramethylguanidine (TMG).

In a specific embodiment, the acetoacetate ester compound is 4,8-bis(hydroxymethyl)tricyclo[5.2.1.0$^{2,6}$]decane diacetoacetate, the acrylate compound is trimethylolpropane triacrylate and the tertiary amine curing catalyst is TMG.

Further specific embodiments of the binder systems of the invention are as follows:

In an embodiment 1, the one or more acetoacetate ester compounds each comprising at least two acetoacetate ester functional groups is 1,4-butanediol diacetoacetate,

the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and

the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

1A. Embodiment according to embodiment 1 wherein the amine curing catalyst is 1,1,3,3-tetramethylguanidine (TMG).

1B. Embodiment according to embodiment 1 wherein the amine curing catalyst is 1,4-diazabicyclo[2.2.2]octane (DABCO).

1C. Embodiment according to embodiment 1 wherein the amine curing catalyst is triethylamine (TEA).

1D. Embodiment according to embodiment 1 wherein the amine curing catalyst is N,N-dimethylisopropylamine.

1E. Embodiment according to embodiment 1 wherein the amine curing catalyst is 1,8-Diazabicyclo(5.4.0)undec-7-ene (DBU).

1F. Embodiment according to embodiment 1 wherein the amine curing catalyst is 1,5-Diazabicyclo(4.3.0)non-5-ene (DBN).

In an embodiment 2, the one or more acetoacetate ester compounds each comprising at least two acetoacetate ester functional groups is 1,6-hexanediol diacetoacetate,
the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and
the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) and 1,5-Diazabicyclo(4.3.0)non-5-ene (DBN).

2A. Embodiment according to embodiment 2 wherein the amine curing catalyst is 1,1,3,3-tetramethylguanidine (TMG).

2B. Embodiment according to embodiment 2 wherein the amine curing catalyst is 1,4-diazabicyclo[2.2.2]octane (DABCO.

2C. Embodiment according to embodiment 2 wherein the amine curing catalyst is triethylamine (TEA).

2D. Embodiment according to embodiment 2 wherein the amine curing catalyst is N,N-dimethylisopropylamine.

2E. Embodiment according to embodiment 2 wherein the amine curing catalyst is 1,8-Diazabicyclo(5.4.0)undec-7-ene (DBU).

2F. Embodiment according to embodiment 2 wherein the amine curing catalyst is 1,5-Diazabicyclo(4.3.0)non-5-ene (DBN).

In an embodiment 3, the one or more acetoacetate ester compounds each comprising at least two acetoacetate ester functional groups is neopentyl glycol diacetoacetate,
the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and

the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

3A. Embodiment according to embodiment 3 wherein the amine curing catalyst is 1,1,3,3-tetramethylguanidine (TMG).

3B. Embodiment according to embodiment 3 wherein the amine curing catalyst is 1,4-diazabicyclo[2.2.2]octane (DABCO.

3C. Embodiment according to embodiment 3 wherein the amine curing catalyst is triethylamine (TEA).

3D. Embodiment according to embodiment 3 wherein the amine curing catalyst is N,N-dimethylisopropylamine.

3E. Embodiment according to embodiment 3 wherein the amine curing catalyst is 1,8-Diazabicyclo(5.4.0)undec-7-ene (DBU).

3F. Embodiment according to embodiment 3 wherein the amine curing catalyst is 1,5-Diazabicyclo(4.3.0)non-5-ene (DBN).

In an embodiment 4, the one or more acetoacetate ester compounds each comprising at least two acetoacetate ester functional groups is the diacetoacetate of 4,8-bis(hydroxymethyl)tricyclo [5.2.1.02,6]decane,

the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and

the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

4A. Embodiment according to embodiment 4 wherein the amine curing catalyst is 1,1,3,3-tetramethylguanidine (TMG).

4B. Embodiment according to embodiment 4 wherein the amine curing catalyst is 1,4-diazabicyclo[2.2.2]octane (DABCO.

4C. Embodiment according to embodiment 4 wherein the amine curing catalyst is triethylamine (TEA).

4D. Embodiment according to embodiment 4 wherein the amine curing catalyst is N,N-dimethylisopropylamine.

4E. Embodiment according to embodiment 4 wherein the amine curing catalyst is 1,8-Diazabicyclo(5.4.0)undec-7-ene (DBU).

4F. Embodiment according to embodiment 4 wherein the amine curing catalyst is 1,5-Diazabicyclo(4.3.0)non-5-ene (DBN).

In an embodiment 5, the one or more acetoacetate ester compounds each comprising at least two acetoacetate ester functional groups is 2-methyl-1,3-propanediol diacetoacetate,
the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and
the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

5A. Embodiment according to embodiment 5 wherein the amine curing catalyst is 1,1,3,3-tetramethylguanidine (TMG).

5B. Embodiment according to embodiment 5 wherein the amine curing catalyst is 1,4-diazabicyclo[2.2.2]octane (DABCO.

5C. Embodiment according to embodiment 5 wherein the amine curing catalyst is triethylamine (TEA).

5D. Embodiment according to embodiment 5 wherein the amine curing catalyst is N,N-dimethylisopropylamine.

5E. Embodiment according to embodiment 5 wherein the amine curing catalyst is 1,8-Diazabicyclo(5.4.0)undec-7-ene (DBU).

5F. Embodiment according to embodiment 5 wherein the amine curing catalyst is 1,5-Diazabicyclo(4.3.0)non-5-ene (DBN).

In an embodiment 6, the one or more acetoacetate ester compounds each comprising at least two acetoacetate ester functional groups is mono-, di-, tri- and tetraethylene glycol diacetoacetate,
the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and
the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

6A. Embodiment according to embodiment 6 wherein the amine curing catalyst is 1,1,3,3-tetramethylguanidine (TMG).

6B. Embodiment according to embodiment 6 wherein the amine curing catalyst is 1,4-diazabicyclo[2.2.2]octane (DABCO.

6C. Embodiment according to embodiment 6 wherein the amine curing catalyst is triethylamine (TEA).

6D. Embodiment according to embodiment 6 wherein the amine curing catalyst is N,N-dimethylisopropylamine.

6E. Embodiment according to embodiment 6 wherein the amine curing catalyst is 1,8-Diazabicyclo(5.4.0)undec-7-ene (DBU).

6F. Embodiment according to embodiment 6 wherein the amine curing catalyst is 1,5-Diazabicyclo(4.3.0)non-5-ene (DBN).

In an embodiment 7, the one or more acetoacetate ester compounds each comprising at least two acetoacetate ester functional groups is polyethylene glycol diacetoacetate,

the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and

the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

7A. Embodiment according to embodiment 7 wherein the amine curing catalyst is 1,1,3,3-tetramethylguanidine (TMG).

7B. Embodiment according to embodiment 7 wherein the amine curing catalyst is 1,4-diazabicyclo[2.2.2]octane (DABCO.

7C. Embodiment according to embodiment 7 wherein the amine curing catalyst is triethylamine (TEA).

7D. Embodiment according to embodiment 7 wherein the amine curing catalyst is N,N-dimethylisopropylamine.

7E. Embodiment according to embodiment 7 wherein the amine curing catalyst is 1,8-Diazabicyclo(5.4.0)undec-7-ene (DBU).

7F. Embodiment according to embodiment 7 wherein the amine curing catalyst is 1,5-Diazabicyclo(4.3.0)non-5-ene (DBN).

In an embodiment 8, the one or more acetoacetate ester compounds each comprising at least two acetoacetate ester functional groups is mono-, di-, tri- and tetrapropylene glycol diacetoacetate, the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and

the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

8A. Embodiment according to embodiment 8 wherein the amine curing catalyst is 1,1,3,3-tetramethylguanidine (TMG).

8B. Embodiment according to embodiment 8 wherein the amine curing catalyst is 1,4-diazabicyclo[2.2.2]octane (DABCO.

8C. Embodiment according to embodiment 8 wherein the amine curing catalyst is triethylamine (TEA).

8D. Embodiment according to embodiment 8 wherein the amine curing catalyst is N,N-dimethylisopropylamine.

8E. Embodiment according to embodiment 8 wherein the amine curing catalyst is 1,8-Diazabicyclo(5.4.0)undec-7-ene (DBU).

8F. Embodiment according to embodiment 8 wherein the amine curing catalyst is 1,5-Diazabicyclo(4.3.0)non-5-ene (DBN).

In an embodiment 9, the one or more acetoacetate ester compounds each comprising at least two acetoacetate ester functional groups is polypropylene glycol diacetoacetate,
the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and
the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

9A. Embodiment according to embodiment 9 wherein the amine curing catalyst is 1,1,3,3-tetramethylguanidine (TMG).

9B. Embodiment according to embodiment 9 wherein the amine curing catalyst is 1,4-diazabicyclo[2.2.2]octane (DABCO.

9C. Embodiment according to embodiment 9 wherein the amine curing catalyst is triethylamine (TEA).

9D. Embodiment according to embodiment 9 wherein the amine curing catalyst is N,N-dimethylisopropylamine.

9E. Embodiment according to embodiment 9 wherein the amine curing catalyst is 1,8-Diazabicyclo(5.4.0)undec-7-ene (DBU).

9F. Embodiment according to embodiment 9 wherein the amine curing catalyst is 1,5-Diazabicyclo(4.3.0)non-5-ene (DBN).

In an embodiment 10, the one or more acetoacetate ester compounds each comprising at least two acetoacetate ester functional groups is cyclohexane dimethanol diacetoacetate,
the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and
the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

10A. Embodiment according to embodiment 10 wherein the amine curing catalyst is 1,1,3,3-tetramethylguanidine (TMG).

10B. Embodiment according to embodiment 10 wherein the amine curing catalyst is 1,4-diazabicyclo[2.2.2]octane (DABCO.

10C. Embodiment according to embodiment 10 wherein the amine curing catalyst is triethylamine (TEA).

10D. Embodiment according to embodiment 10 wherein the amine curing catalyst is N,N-dimethylisopropylamine.

10E. Embodiment according to embodiment 10 wherein the amine curing catalyst is 1,8-Diazabicyclo(5.4.0)undec-7-ene (DBU).

10F. Embodiment according to embodiment 10 wherein the amine curing catalyst is 1,5-Diazabicyclo(4.3.0)non-5-ene (DBN).

In an embodiment 11, the one or more acetoacetate ester compounds each comprising at least two acetoacetate ester functional groups is trimethylolethane triacetoacetate,
the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and
the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

11A. Embodiment according to embodiment 11 wherein the amine curing catalyst is 1,1,3,3-tetramethylguanidine (TMG).

11B. Embodiment according to embodiment 11 wherein the amine curing catalyst is 1,4-diazabicyclo[2.2.2]octane (DABCO.

11C. Embodiment according to embodiment 11 wherein the amine curing catalyst is triethylamine (TEA).

11D. Embodiment according to embodiment 11 wherein the amine curing catalyst is N,N-dimethylisopropylamine.

11E. Embodiment according to embodiment 11 wherein the amine curing catalyst is 1,8-Diazabicyclo(5.4.0)undec-7-ene (DBU).

11F. Embodiment according to embodiment 11 wherein the amine curing catalyst is 1,5-Diazabicyclo(4.3.0)non-5-ene (DBN).

In an embodiment 12, the one or more acetoacetate ester compounds each comprising at least two acetoacetate ester functional groups is trimethylolpropane triacetoacetate,

the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and
the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

12A. Embodiment according to embodiment 12 wherein the amine curing catalyst is 1,1,3,3-tetramethylguanidine (TMG).

12B. Embodiment according to embodiment 12 wherein the amine curing catalyst is 1,4-diazabicyclo[2.2.2]octane (DABCO.

12C. Embodiment according to embodiment 12 wherein the amine curing catalyst is triethylamine (TEA).

12D. Embodiment according to embodiment 12 wherein the amine curing catalyst is N,N-dimethylisopropylamine.

12E. Embodiment according to embodiment 12 wherein the amine curing catalyst is 1,8-Diazabicyclo(5.4.0)undec-7-ene (DBU).

12F. Embodiment according to embodiment 12 wherein the amine curing catalyst is 1,5-Diazabicyclo(4.3.0)non-5-ene (DBN).

In an embodiment 13, the one or more acetoacetate ester compounds each comprising at least two acetoacetate ester functional groups is ethoxylated trimethylolethane triacetoactate,
the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and
the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

13A. Embodiment according to embodiment 13 wherein the amine curing catalyst is 1,1,3,3-tetramethylguanidine (TMG).

13B. Embodiment according to embodiment 13 wherein the amine curing catalyst is 1,4-diazabicyclo[2.2.2]octane (DABCO.

13C. Embodiment according to embodiment 13 wherein the amine curing catalyst is triethylamine (TEA).

13D. Embodiment according to embodiment 13 wherein the amine curing catalyst is N,N-dimethylisopropylamine.

13E. Embodiment according to embodiment 13 wherein the amine curing catalyst is 1,8-Diazabicyclo(5.4.0)undec-7-ene (DBU).

13F. Embodiment according to embodiment 13 wherein the amine curing catalyst is 1,5-Diazabicyclo(4.3.0)non-5-ene (DBN).

In an embodiment 14, the one or more acetoacetate ester compounds each comprising at least two acetoacetate ester functional groups is propoxylated trimethylolethane triacetoactate,
the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and
the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

14A. Embodiment according to embodiment 14 wherein the amine curing catalyst is 1,1,3,3-tetramethylguanidine (TMG).

14B. Embodiment according to embodiment 14 wherein the amine curing catalyst is 1,4-diazabicyclo[2.2.2]octane (DABCO.

14C. Embodiment according to embodiment 14 wherein the amine curing catalyst is triethylamine (TEA).

14D. Embodiment according to embodiment 14 wherein the amine curing catalyst is N,N-dimethylisopropylamine.

14E. Embodiment according to embodiment 14 wherein the amine curing catalyst is 1,8-Diazabicyclo(5.4.0)undec-7-ene (DBU).

14F. Embodiment according to embodiment 14 wherein the amine curing catalyst is 1,5-Diazabicyclo(4.3.0)non-5-ene (DBN).

In an embodiment 15, the one or more acetoacetate ester compounds each comprising at least two acetoacetate ester functional groups is ethoxylated trimethylolpropanetriacetoactate,
the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and
the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

15A. Embodiment according to embodiment 15 wherein the amine curing catalyst is 1,1,3,3-tetramethylguanidine (TMG).

15B. Embodiment according to embodiment 15 wherein the amine curing catalyst is 1,4-diazabicyclo[2.2.2]octane (DABCO.

15C. Embodiment according to embodiment 15 wherein the amine curing catalyst is triethylamine (TEA).

15D. Embodiment according to embodiment 15 wherein the amine curing catalyst is N,N-dimethylisopropylamine.

15E. Embodiment according to embodiment 15 wherein the amine curing catalyst is 1,8-Diazabicyclo(5.4.0)undec-7-ene (DBU).

15F. Embodiment according to embodiment 15 wherein the amine curing catalyst is 1,5-Diazabicyclo(4.3.0)non-5-ene (DBN).

In an embodiment 16, the one or more acetoacetate ester compounds each comprising at least two acetoacetate ester functional groups is propoxylated trimethylolpropanetriacetoactate,
the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and
the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

16A. Embodiment according to embodiment 16 wherein the amine curing catalyst is 1,1,3,3-tetramethylguanidine (TMG).

16B. Embodiment according to embodiment 16 wherein the amine curing catalyst is 1,4-diazabicyclo[2.2.2]octane (DABCO.

16C. Embodiment according to embodiment 16 wherein the amine curing catalyst is triethylamine (TEA).

16D. Embodiment according to embodiment 16 wherein the amine curing catalyst is N,N-dimethylisopropylamine.

16E. Embodiment according to embodiment 16 wherein the amine curing catalyst is 1,8-Diazabicyclo(5.4.0)undec-7-ene (DBU).

16F. Embodiment according to embodiment 16 wherein the amine curing catalyst is 1,5-Diazabicyclo(4.3.0)non-5-ene (DBN).

In an embodiment 17, the one or more acetoacetate ester compounds each comprising at least two acetoacetate ester functional groups is pentaerythritol triacetoacetate,
the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and

the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

17A. Embodiment according to embodiment 17 wherein the amine curing catalyst is 1,1,3,3-tetramethylguanidine (TMG).

17B. Embodiment according to embodiment 17 wherein the amine curing catalyst is 1,4-diazabicyclo[2.2.2]octane (DABCO.

17C. Embodiment according to embodiment 17 wherein the amine curing catalyst is triethylamine (TEA).

17D. Embodiment according to embodiment 17 wherein the amine curing catalyst is N,N-dimethylisopropylamine.

17E. Embodiment according to embodiment 17 wherein the amine curing catalyst is 1,8-Diazabicyclo(5.4.0)undec-7-ene (DBU).

17F. Embodiment according to embodiment 17 wherein the amine curing catalyst is 1,5-Diazabicyclo(4.3.0)non-5-ene (DBN).

In an embodiment 18, the one or more acetoacetate ester compounds each comprising at least two acetoacetate ester functional groups is glycerol triacetoacetate, di(trimethylolpropane) tetraacetoacetate,

the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and

the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

18A. Embodiment according to embodiment 18 wherein the amine curing catalyst is 1,1,3,3-tetramethylguanidine (TMG).

18B. Embodiment according to embodiment 18 wherein the amine curing catalyst is 1,4-diazabicyclo[2.2.2]octane (DABCO.

18C. Embodiment according to embodiment 18 wherein the amine curing catalyst is triethylamine (TEA).

18D. Embodiment according to embodiment 18 wherein the amine curing catalyst is N,N-dimethylisopropylamine.

18E. Embodiment according to embodiment 18 wherein the amine curing catalyst is 1,8-Diazabicyclo(5.4.0)undec-7-ene (DBU).

18F. Embodiment according to embodiment 18 wherein the amine curing catalyst is 1,5-Diazabicyclo(4.3.0)non-5-ene (DBN).

In an embodiment 19, the one or more acetoacetate ester compounds each comprising at least two acetoacetate ester functional groups is pentaerythritol tetraacetoacetate,

the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and

the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

19A. Embodiment according to embodiment 19 wherein the amine curing catalyst is 1,1,3,3-tetramethylguanidine (TMG).

19B. Embodiment according to embodiment 19 wherein the amine curing catalyst is 1,4-diazabicyclo[2.2.2]octane (DABCO.

19C. Embodiment according to embodiment 19 wherein the amine curing catalyst is triethylamine (TEA).

19D. Embodiment according to embodiment 19 wherein the amine curing catalyst is N,N-dimethylisopropylamine.

19E. Embodiment according to embodiment 19 wherein the amine curing catalyst is 1,8-Diazabicyclo(5.4.0)undec-7-ene (DBU).

19F. Embodiment according to embodiment 19 wherein the amine curing catalyst is 1,5-Diazabicyclo(4.3.0)non-5-ene (DBN).

In an embodiment 20, the one or more acetoacetate ester compounds each comprising at least two acetoacetate ester functional groups is dipentaerythritol pentaacetoacetate,

the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and

the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

20A. Embodiment according to embodiment 20 wherein the amine curing catalyst is 1,1,3,3-tetramethylguanidine (TMG).

20B. Embodiment according to embodiment 20 wherein the amine curing catalyst is 1,4-diazabicyclo[2.2.2]octane (DABCO.

20C. Embodiment according to embodiment 20 wherein the amine curing catalyst is triethylamine (TEA).

20D. Embodiment according to embodiment 20 wherein the amine curing catalyst is N,N-dimethylisopropylamine.

20E. Embodiment according to embodiment 20 wherein the amine curing catalyst is 1,8-Diazabicyclo(5.4.0)undec-7-ene (DBU).

20F. Embodiment according to embodiment 20 wherein the amine curing catalyst is 1,5-Diazabicyclo(4.3.0)non-5-ene (DBN).

In an embodiment 21, the one or more acetoacetate ester compounds each comprising at least two acetoacetate ester functional groups is dipentaerythritol hexaacetoacetate,
the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and
the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

21A. Embodiment according to embodiment 21 wherein the amine curing catalyst is 1,1,3,3-tetramethylguanidine (TMG).

21B. Embodiment according to embodiment 21 wherein the amine curing catalyst is 1,4-diazabicyclo[2.2.2]octane (DABCO.

21C. Embodiment according to embodiment 21 wherein the amine curing catalyst is triethylamine (TEA).

21D. Embodiment according to embodiment 21 wherein the amine curing catalyst is N,N-dimethylisopropylamine.

21E. Embodiment according to embodiment 21 wherein the amine curing catalyst is 1,8-Diazabicyclo(5.4.0)undec-7-ene (DBU).

21F. Embodiment according to embodiment 21 wherein the amine curing catalyst is 1,5-Diazabicyclo(4.3.0)non-5-ene (DBN).

In an embodiment 22, the one or more acetoacetate ester compounds each comprising at least two acetoacetate ester functional groups is acetoacetylated polyvinyl alcohols, the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

22A. Embodiment according to embodiment 22 wherein the amine curing catalyst is 1,1,3,3-tetramethylguanidine (TMG).

22B. Embodiment according to embodiment 22 wherein the amine curing catalyst is 1,4-diazabicyclo[2.2.2]octane (DABCO.

22C. Embodiment according to embodiment 22 wherein the amine curing catalyst is triethylamine (TEA).

22D. Embodiment according to embodiment 22 wherein the amine curing catalyst is N,N-dimethylisopropylamine.

22E. Embodiment according to embodiment 22 wherein the amine curing catalyst is 1,8-Diazabicyclo(5.4.0)undec-7-ene (DBU).

22F. Embodiment according to embodiment 22 wherein the amine curing catalyst is 1,5-Diazabicyclo(4.3.0)non-5-ene (DBN).

In an embodiment 23, the one or more acetoacetate ester compounds each comprising at least two acetoacetate ester functional groups is acetoacetylated polyester resins,
the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and
the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

23A. Embodiment according to embodiment 23 wherein the amine curing catalyst is 1,1,3,3-tetramethylguanidine (TMG).

23B. Embodiment according to embodiment 23 wherein the amine curing catalyst is 1,4-diazabicyclo[2.2.2]octane (DABCO.

23C. Embodiment according to embodiment 23 wherein the amine curing catalyst is triethylamine (TEA).

23D. Embodiment according to embodiment 23 wherein the amine curing catalyst is N,N-dimethylisopropylamine.

23E. Embodiment according to embodiment 23 wherein the amine curing catalyst is 1,8-Diazabicyclo(5.4.0)undec-7-ene (DBU).

23F. Embodiment according to embodiment 23 wherein the amine curing catalyst is 1,5-Diazabicyclo(4.3.0)non-5-ene (DBN).

In an embodiment 24, the one or more acetoacetate ester compounds each comprising at least two acetoacetate ester functional groups is decaglycerol deca-(Z)-oleate,

the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and
the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

24A. Embodiment according to embodiment 24 wherein the amine curing catalyst is 1,1,3,3-tetramethylguanidine (TMG).

24B. Embodiment according to embodiment 24 wherein the amine curing catalyst is 1,4-diazabicyclo[2.2.2]octane (DABCO.

24C. Embodiment according to embodiment 24 wherein the amine curing catalyst is triethylamine (TEA).

24D. Embodiment according to embodiment 24 wherein the amine curing catalyst is N,N-dimethylisopropylamine.

24E. Embodiment according to embodiment 24 wherein the amine curing catalyst is 1,8-Diazabicyclo(5.4.0)undec-7-ene (DBU).

24F. Embodiment according to embodiment 24 wherein the amine curing catalyst is 1,5-Diazabicyclo(4.3.0)non-5-ene (DBN).

In an embodiment 25, the one or more acetoacetate ester compounds each comprising at least two acetoacetate ester functional groups is an acetoacetate ester of an alcohol such as isosorbide, glucose or 4,8-bis(hydroxymethyl)tricyclo [5.2.1.0$^{2,6}$]-decane,
the one or more acrylate compounds are indepenently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.02,6]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, and
the amine curing catalyst is 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) or 1,5-Diazabicyclo(4.3.0)non-5-ene (DBN).

25A. Embodiment according to embodiment 25 wherein the amine curing catalyst is 1,1,3,3-tetramethylguanidine (TMG).

25B. Embodiment according to embodiment 25 wherein the amine curing catalyst is 1,4-diazabicyclo[2.2.2]octane (DABCO.

25C. Embodiment according to embodiment 25 wherein the amine curing catalyst is triethylamine (TEA).

25D. Embodiment according to embodiment 25 wherein the amine curing catalyst is N,N-dimethylisopropylamine.

25E. Embodiment according to embodiment 25 wherein the amine curing catalyst is 1,8-Diazabicyclo(5.4.0)undec-7-ene (DBU).

25F. Embodiment according to embodiment 25 wherein the amine curing catalyst is 1,5-Diazabicyclo(4.3.0)non-5-ene (DBN).

In said binder system of the invention, the functional group ratio of the functional groups of said one or more acetoacetate ester and of the functional groups of said one or more acrylate (AA/ACR) is from 0.15 to 1.50, preferably from 0.2 to 1.25, more preferably, from 0.25 to 0.95, even more preferably, from 0.25 to 0.85, especially, from 0.3 to 0.85, more especially from 0.3 to 0.75, more especially from 0.3 to 0.70, even more especially from 0.3 to 0.65, most especially from 0.3 to 0.6, specifically from 0.3 to 0.55, more specifically from 0.3 to 0.5.

The amount of said tertiary amine curing catalyst in said binder system ranges from 0.1% (w/w) to 14% (w/w), from 0.2% (w/w) to 10% (w/w), from 0.3% (w/w) to 5% (w/w), from 0.4% (w/w) to 2.5% (w/w), from 0.5% (w/w) to 2.0% (w/w), from 0.7% (w/w) to 1.5% (w/w), from 0.1% (w/w) to 2% (w/w), from 0.1% (w/w) to 1.0% (w/w), from 0.15% (w/w) to 0.7% (w/w), or from 0.15% (w/w) to 0.5% (w/w) relative to the totality of the amount of the one or more acetoacetate ester compound and the one or more acrylate compound (i.e., relative to the amount of resin formulation used).

Preferably, the amount of tertiary amine curing catalyst is from 0.2% (w/w) to 2.5% (w/w), more preferably from 0.4% (w/w) to 2.0% (w/w), even more preferably from 0.5% (w/w) to 2.0% (w/w), especially from 0.5% (w/w) to 1.5% (w/w), and more especially from 0.7% (w/w) to 1.5% (w/w) relative to the totality of the amount of the one or more acetoacetate ester compound and the one or more acrylate compound.

In one embodiment, the amount of tertiary amine curing catalyst is from 0.1% (w/w) to 2% (w/w), preferably from 0.1% (w/w) to 1.0% (w/w), more preferably from 0.15% (w/w) to 0.7% (w/w), and most preferably from 0.15% (w/w) to 0.5% (w/w) relative to the totality of the amount of the one or more acetoacetate ester compound and the one or more acrylate compound.

In one embodiment the amount of the amine curing catalyst may range from 0.01 to 10 wt%, from 0.05 to 7.5 wt%, from 0.05 to 5 wt%, from 0.05 to 2.5 wt%, from 0.05 to 1 wt%, from 0.05 to 0.75 wt%, from 0.075 to 0.5 wt%, or from 0.1 to 0.3 wt%, the wt% being based in the total weight of the resin composition

The invention further relates to a method of preparing the binder system according to the invention comprising mixing said one or more acetoacetate ester compounds and said one or more acrylate compounds and said tertiary amine curing catalyst. Preferably, the method comprises mixing said one or more acetoacetate ester compounds with said tertiary amine curing catalyst, and subsequently adding said one or more acrylate compounds; in another embodiment, the method comprises mixing said one or more acrylate compounds with said tertiary amine curing catalyst, and subsequently adding said one or more acetoacetate ester compounds.

Compared to using isocyanate containing binder systems, the use of the binder system of the invention is less sensitive to residual moisture. Isocyanates used in binders typically hydrolyze in the presence of minute amounts of water, which has a negative impact on the binding strength of the isocyanate-based resin system. The binder system in accordance with the invention does not show any tendency to undergo hydrolysis as a result of exposure to water (e.g. moist sand or air moisture). Hence, there is no need to use particularly dry sand for preparing foundry shapes according to the invention.

Generally, chemicals synthesized on an industrial scale often comprise impurities that may affect their downstream applications, i.e., cause unwanted side reactions and/or inhibit downstream reactions. Acetoacetate ester compounds in particular are advantageously synthesized from diketene precursors and multifunctional alcohols. This synthetic route is highly efficient and does not produce side products which have the potential to directly affect the mechanical properties of a resulting mold or core in a detrimental way. However, acetoacetate esters synthesized from diketene precursors commonly contain dehydroacetic acid (DHS) as an impurity, which may consume the commonly used amine curing catalyst and therefore necessitate the use of higher amounts of these amine- curing catalysts.

However, it is generally desirable to use low amounts of an amine catalyst for curing, as such amines may act as softeners or plasticizers in the final foundry mold or core, and as such reduce the hardness and/or tensile strength.

The acetoacetate ester compound used in the binder system and methods of the invention may comprise DHS in an amount of up to 5000 ppm (parts per million), since the particular tertiary amine curing catalysts employed in the method of the invention, such as TMG (1,1,3,3-tetramethylguanidine) can be used in unusually low amounts and still achieve fast curing and a high degree of hardness and/or tensile strength of the final foundry mold or core. Hence, there is no need to purify the acetoacetate ester compound from DHS before using it in the method of the invention.

The invention further relates to a foundry shape prepared by the method according to the present invention.

The invention further relates to the use of said binder system according to the invention for preparing a resin, preferably wherein preparation of the resin comprises curing of the resin.

Another aspect of the invention relates to the use of a resin formulation or a binder system as described above in the method of preparing a foundry shape according to the invention. A resin formulation of the invention comprises one or more acetoacetate ester compound as defined herein above and one or more acrylate compounds as defined herein above. A binder system of the invention further comprises said resin formulation and a tertiary amine curing catalyst as defined herein above.

In an further aspect, the invention relates to kit for forming a binder system to be used in the method of the invention, which comprises a resin formulation and a tertiary amine curing catalyst, wherein the resin formulation comprises one or more acetoacetate ester compounds independently selected from the group consisting of cyclohexanedimethanol diacetoacetate, glycerol triacetoacetate, neopentyl glycol diacetoacetate, ethylene glycol diacetoacetate, trimethylolpropane triacetoacetate, pentaerythritol tetraacetoacetate, acetoacetylated polyvinyl alcohols and acetoacetylated polyester resins, and one or more acrylate compounds independently selected from the group consisting of pentaerythritol tetraacrylate, trimethylolpropane triacrylate, 1,6-hexanediol diacrylate, tetraethylene glycol diacrylate, di(trimethylolpropane) tetraacrylate and tripropylene glycol diacrylate, wherein the functional group ratio of the acetoacetate ester functional groups and the acrylate functional groups is from 0.3 to 0.75; and wherein the tertiary amine curing catalyst is 1,1,3,3-tetramethylguanidine.

More preferably, said kit comprises a resin formulation and a tertiary amine curing catalyst, wherein the resin formulation comprises one or more acetoacetate ester compounds independently selected from the group consisting of trimethylolpropane triacetoacetate, glycerol triacetoacetate and ethylene glycol, and one or more acrylate compounds independently selected from the group consisting of trimethylolpropane triacrylate, di(trimethylolpropane) tetraacrylate and tripropylene glycol diacrylate , wherein the functional group ratio of the acetoacetate ester functional groups and the acrylate functional groups is from 0.3 to 0.75; and wherein the tertiary amine curing catalyst is 1,1,3,3-tetramethylguanidine.

Most preferably, said kit comprises a resin formulation and a tertiary amine curing catalyst, wherein the resin formulation comprises one or more acetoacetate ester compounds independently selected from the group consisting of trimethylolpropane triacetoacetate, glycerol triacetoacetate and ethylene glycol bisacetoacetate, and trimethylolpropane triacrylate, wherein the functional group ratio of the acetoacetate ester functional groups and the acrylate functional groups is from 0.3 to 0.75, and wherein the tertiary amine curing catalyst is 1,1,3,3-tetramethylguanidine.

A further subject of the invention is the use of the resin composition of the invention for the preparation of fiber reinforced parts, with the resin composition as defined herein, also with all its embodiments.

A further subject of the invention is a kit for forming the fiber resin composition to be used in the method for preparation fiber reinforced parts as defined herein, also with all its embodiments, the kit comprises

- acetoacetate ester compound, acrylate compound, amine curing catalyst and fiber; or
- premix A, acetoacetate ester compound and fiber; or
- premix B, acrylate compound and fiber; or
- premix C, amine curing catalyst and fiber;

wherein premix A, premix B, premix C, fiber resin composition, acetoacetate ester compound, acrylate compound, amine curing catalyst and fiber are as defined herein, also with all their embodiments.

A further subject of the invention is the fiber resin composition, with the fiber resin composition as defined herein, also with all its embodiments.

A further subject of the invention is a fiber reinforced part prepared by the method according to the present invention.

## Items of the invention

1. A method of preparing a foundry shape comprising the steps of

    i) mixing a foundry aggregate with a resin formulation to give a foundry mix, and

    ii) curing said foundry mix with a tertiary amine curing catalyst that is provided in the form of a gas and/or in a stream of an inert gas,

    wherein said resin formulation comprises

a) one or more acetoacetate ester compounds each comprising at least two acetoacetate ester functional groups, and

b) one or more acrylate compounds each comprising at least two acrylate functional groups,

and wherein the functional group ratio of the acetoacetate ester functional groups and the acrylate functional groups is from 0.3 to 0.75.

2. The method of item 1, wherein the tertiary amine curing catalyst comprises 1,1,3,3-tetramethylguanidine (TMG) and/or 1,4-diazabicyclo[2.2.2]octane (DABCO).

3. The method of items 1 or 2, wherein the tertiary amine curing catalyst comprises 1,1,3,3-tetramethylguanidine, or wherein the tertiary amine curing catalyst is 1,1,3,3-tetramethylguanidine.

4. The method of any one of the preceding items, wherein the one or more acetoacetate ester compounds are independently selected from the group consisting of cyclohexane dimethanol diacetoacetate, glycerol triacetoacetate, neopentyl glycol diacetoacetate, ethylene glycol diacetoacetate, trimethylolpropane triacetoacetate, pentaerythritol tetraacetoacetate, acetoacetylated polyvinyl alcohols and acetoacetylated polyester resins.

5. The method of item 4, wherein the one or more acetoacetate ester compounds are independently selected from the group consisting of trimethylolpropane triacetoacetate, glycerol triacetoacetate and ethylene glycol diacetoacetate.

6. The method of any one of the preceding items, wherein the one or more acrylate compounds are independently selected from the group consisting of pentaerythritol triacrylate, trimethylolpropane triacrylate, 1,6-hexanediol diacrylate, tetraethylene glycol diacrylate, di(trimethylolpropane) tetraacrylate and tripropylene glycol diacrylate.

7. The method of item 6, wherein the one or more acrylate compounds are independently selected from the group consisting of trimethylolpropane triacrylate, di(trimethylolpropane) tetraacrylate and tripropylene glycol diacrylate.

8. The method of item 6, wherein the acrylate compound is trimethylolpropane triacrylate.

9. The method of any one of the preceding items, wherein amount of the resin formulation relative to the amount of the foundry aggregate is from 0.5% (w/w) to 15% (w/w), from 1% (w/w) to 12.5% (w/w), or from 2% (w/w) to 10% (w/w).

10. The method of any one of the preceding items, wherein said resin formulation and/or foundry mix is essentially free of solvent.

11. The method of any one of the preceding items, wherein the amount of the tertiary amine curing catalyst required for step ii) ranges from 0.2% (w/w) to 2.5% (w/w) relative to the amount of resin formulation used in step i), from 0.4% (w/w) to 2.0% (w/w), or from 0.7% (w/w) to 1.5% (w/w).

12. The method of any one of the preceding items, wherein the foundry aggregate is sand.

13. The method of any one of the preceding items, wherein the hardness of the foundry shape is from 85 shore A to 100 shore A.

14. The method of any one of the preceding items, wherein the foundry shape is a foundry mold or a foundry core.

15. A foundry shape prepared by the method according to any one of the preceding items.

16. Use of a resin formulation as defined in any one of items 1, or 4 to 8 in the method of item 1.

17. A kit for use in the method of item 1 comprising a resin formulation and a tertiary amine curing catalyst, wherein the resin formulation comprises one or more acetoacetate ester compound selected from the group consisting of trimethylolpropane triacetoacetate, glycerol triacetoacetate and ethylene glycol diacetoacetate, and trimethylolpropane triacrylate, wherein the functional group ratio of the acetoacetate ester functional groups and the acrylate functional groups is from 0.3 to 0.75, and wherein the tertiary amine curing catalyst is 1,1,3,3-tetramethylguanidine.

18. A binder system comprising one or more acetoacetate ester compounds, one or more acrylate compounds and a tertiary amine curing catalyst, wherein the one or more acetoacetate ester compound comprises glycerol triacetoacetate, the one or more acrylate compound comprises trimethylolpropane triacrylate and the tertiary amine curing catalyst is 1,1,3,3-tetramethylguanidine (TMG), wherein the functional group ratio of the functional groups of said one or more acetoacetate ester and of the functional groups of said one or more acrylate is from 0.3 to 0.75.

19. The binder system of item 18, wherein the acetoacetate ester compound is glycerol triacetoacetate, the acrylate compound is trimethylolpropane triacrylate and the tertiary amine curing catalyst is TMG.

20. The binder system of any one of items 18 or 19, wherein the amount of said tertiary amine curing catalyst in said binder system ranges from 0.1% (w/w) to 14% (w/w), from 0.2% (w/w) to 10% (w/w), from 0.3% (w/w) to 5% (w/w), from 0.4% (w/w) to 2.5% (w/w), from 0.5% (w/w) to 2.0% (w/w) or from 0.7% (w/w) to 1.5% (w/w) relative to the totality of the amount of the one or more acetoacetate ester compound and the one or more acrylate compound.

21. A method of preparing the binder system of any one of items 18 to 20, comprising mixing said one or more acetoacetate ester compounds and said one or more acrylate compounds and said tertiary amine curing catalyst.

22. The method of item 21 comprising mixing said one or more acetoacetate ester compounds with said tertiary amine curing catalyst, and subsequently adding said one or more acrylate compounds.

23. The method of item 21, comprising mixing said one or more acrylate compounds with said tertiary amine curing catalyst, and subsequently adding said one or more acetoacetate ester compounds.

24. Use of the binder system of any one of items 18 to 20 for preparing a resin.

25. The use of item 24, wherein the preparation of said resin comprises curing of the resin.

26. A binder system comprising one or more acetoacetate ester compounds, one or more acrylate compounds and a tertiary amine curing catalyst, wherein the one or more acetoacetate ester compound comprises glycerol triacetoacetate, the one or more acrylate compound comprises trimethylolpropane triacrylate and the tertiary amine curing catalyst is 1,4-diazabicyclo[2.2.2]octane (DABCO), wherein the functional group ratio of the functional groups of said one or more acetoacetate ester and of the functional groups of said one or more acrylate is from 0.3 to 0.75.

27. The binder system of item 26, wherein the acetoacetate ester compound is glycerol triacetoacetate, the acrylate compound is trimethylolpropane triacrylate and the tertiary amine curing catalyst is DABCO.

28. The binder system of any one of items 26 or 27, wherein the amount of said tertiary amine curing catalyst in said binder system ranges from 0.1% (w/w) to 14% (w/w), from 0.2% (w/w) to 10% (w/w), from 0.3% (w/w) to 5% (w/w), from 0.4% (w/w) to 2.5% (w/w), from 0.5% (w/w) to 2.0% (w/w) or from 0.7% (w/w) to 1.5% (w/w) relative to the totality of the amount of the one or more acetoacetate ester compound and the one or more acrylate compound.

29. A method of preparing the binder system of items 26 to 28, comprising mixing said one or more acetoacetate ester compounds and said one or more acrylate compounds and said tertiary amine curing catalyst.

30. The method of item 29, comprising mixing said one or more acetoacetate ester compounds with said tertiary amine curing catalyst, and subsequently adding said one or more acrylate compounds.

31. The method of item 29, comprising mixing said one or more acrylate compounds with said tertiary amine curing catalyst, and subsequently adding said one or more acetoacetate ester compounds.

32. Use of the binder system of any one of items 26 to 28 for preparing a resin.

33. The use of item 32, wherein the preparation of said resin comprises curing of the resin.

34. A binder system comprising one or more acetoacetate ester compounds, one or more acrylate compounds and a tertiary amine curing catalyst, wherein the one or more acetoacetate ester compound comprises trimethylolpropane triacetoacetate, the one or more acrylate compound comprises trimethylolpropane triacrylate and the tertiary amine curing catalyst is 1,1,3,3-tetramethylguanidine (TMG), wherein the functional group ratio of the functional groups of said one or more acetoacetate ester and of the functional groups of said one or more acrylate is from 0.3 to 0.75.

35. The binder system of item 34, wherein the acetoacetate ester compound is trimethylolpropane triacetoacetate, the acrylate compound is trimethylolpropane triacrylate and the tertiary amine curing catalyst is TMG.

36. The binder system of any one of items 34 or 35, wherein the amount of said tertiary amine curing catalyst in said binder system ranges from 0.1% (w/w) to 14% (w/w), from 0.2% (w/w) to 10% (w/w), from 0.3% (w/w) to 5% (w/w), from 0.4% (w/w) to 2.5% (w/w), from 0.5% (w/w) to 2.0% (w/w) or from 0.7% (w/w) to 1.5% (w/w) relative to the totality of the amount of the one or more acetoacetate ester compound and the one or more acrylate compound.

37. A method of preparing the binder system of any one of items 34 to 36, comprising mixing said one or more acetoacetate ester compounds and said one or more acrylate compounds and said tertiary amine curing catalyst.

38. The method of item 37, comprising mixing said one or more acetoacetate ester compounds with said tertiary amine curing catalyst, and subsequently adding said one or more acrylate compounds.

39. The method of item 37, comprising mixing said one or more acrylate compounds with said tertiary amine curing catalyst, and subsequently adding said one or more acetoacetate ester compounds.

40. Use of the binder system of any one of items 34 to 36 for preparing a resin.

41. The use of item 40, wherein the preparation of said resin comprises curing of the resin.

42. A binder system comprising one or more acetoacetate ester compounds, one or more acrylate compounds and a tertiary amine curing catalyst, wherein the one or more acetoacetate ester compound comprises trimethylolpropane triacetoacetate, the one or more acrylate compound comprises trimethylolpropane triacrylate and the tertiary amine curing catalyst is 1,4-diazabicyclo[2.2.2]octane (DABCO), wherein the functional group ratio of the functional groups of said one or more acetoacetate ester and of the functional groups of said one or more acrylate is from 0.3 to 0.75.

43. The binder system of item 42, wherein the acetoacetate ester compound is trimethylolpropane triacetoacetate, the acrylate compound is trimethylolpropane triacrylate and the tertiary amine curing catalyst is DABCO.

44. The binder system of any one of items 42 or 43, wherein the amount of said tertiary amine curing catalyst in said binder system ranges from 0.1% (w/w) to 14% (w/w), from 0.2% (w/w) to 10% (w/w), from 0.3% (w/w) to 5% (w/w), from 0.4% (w/w) to 2.5% (w/w), from 0.5% (w/w) to 2.0% (w/w) or from 0.7% (w/w) to 1.5% (w/w) relative to the totality of the amount of the one or more acetoacetate ester compound and the one or more acrylate compound.

45. A method of preparing the binder system of any one of items 42 to 44, comprising mixing said one or more acetoacetate ester compounds and said one or more acrylate compounds and said tertiary amine curing catalyst.

46. The method of item 45, comprising mixing said one or more acetoacetate ester compounds with said tertiary amine curing catalyst, and subsequently adding said one or more acrylate compounds.

47. The method of item 45, comprising mixing said one or more acrylate compounds with said tertiary amine curing catalyst, and subsequently adding said one or more acetoacetate ester compounds.

48. Use of the binder system of any one of items 42 to 44 for preparing a resin.

49. The use of item 48, wherein the preparation of said resin comprises curing of the resin.

50. A binder system comprising one or more acetoacetate ester compounds, one or more acrylate compounds and a tertiary amine curing catalyst, wherein the one or more acetoacetate ester compound comprises ethylene glycol diacetoacetate, the one or more acrylate compound comprises trimethylolpropane triacrylate and the tertiary amine curing catalyst is 1,1,3,3-tetramethylguanidine (TMG), wherein the functional group ratio of the functional groups of said one or more acetoacetate ester and of the functional groups of said one or more acrylate is from 0.3 to 0.75.

51. The binder system of item 50, wherein the acetoacetate ester compound is ethylene glycol diacetoacetate, the acrylate compound is trimethylolpropane triacrylate and the tertiary amine curing catalyst is TMG.

52. The binder system of any one of items 50 or 51, wherein the amount of said tertiary amine curing catalyst in said binder system ranges from 0.1% (w/w) to 14% (w/w), from 0.2% (w/w) to 10% (w/w), from 0.3% (w/w) to 5% (w/w), from 0.4% (w/w) to 2.5% (w/w), from 0.5% (w/w) to 2.0% (w/w) or from 0.7% (w/w) to 1.5% (w/w) relative to the totality of the amount of the one or more acetoacetate ester compound and the one or more acrylate compound.

53. A method of preparing the binder system of any one items 50 to 52, comprising mixing said one or more acetoacetate ester compounds and said one or more acrylate compounds and said tertiary amine curing catalyst.

54. The method of item 53, comprising mixing said one or more acetoacetate ester compounds with said tertiary amine curing catalyst, and subsequently adding said one or more acrylate compounds.

55. The method of item 53, comprising mixing said one or more acrylate compounds with said tertiary amine curing catalyst, and subsequently adding said one or more acetoacetate ester compounds.

56. Use of the binder system of any one of items 50 to 52 for preparing a resin.

57. The use of item 56, wherein the preparation of said resin comprises curing of the resin.

58. A binder system comprising one or more acetoacetate ester compounds, one or more acrylate compounds and a tertiary amine curing catalyst, wherein the one or more acetoacetate ester compound comprises isosorbide diacetoacetate, the one or more acrylate compound comprises is trimethylolpropane triacrylate and the tertiary amine curing catalyst is 1,1,3,3-tetramethylguanidine (TMG).

59. The binder system of item 58, wherein the one or more acetoacetate ester compound comprises isosorbide diacetoacetate, the one or more acrylate compound comprises is trimethylolpropane triacrylate and the tertiary amine curing catalyst is 1,1,3,3-tetramethylguanidine (TMG), and wherein the functional group ratio of the functional groups of said one or more acetoacetate ester and of the functional groups of said one or more acrylate is from 0.3 to 0.75.

60. The binder system of items 58 to 59, wherein the acetoacetate ester compound is isosorbide diacetoacetate, the acrylate compound is trimethylolpropane triacrylate and the tertiary amine curing catalyst is TMG.

61. The binder system of any one of items 58 to 60, wherein the amount of said tertiary amine curing catalyst in said binder system ranges from 0.1% (w/w) to 14% (w/w), from 0.2% (w/w) to 10% (w/w), from 0.3% (w/w) to 5% (w/w), from 0.4% (w/w) to 2.5% (w/w), from 0.5% (w/w) to 2.0% (w/w) or from 0.7% (w/w) to 1.5% (w/w) relative to the totality of the amount of the one or more acetoacetate ester compound and the one or more acrylate compound.

62. A method of preparing the binder system of any one items 58 to 61, comprising mixing said one or more acetoacetate ester compounds and said one or more acrylate compounds and said tertiary amine curing catalyst.

63. The method of item 62, comprising mixing said one or more acetoacetate ester compounds with said tertiary amine curing catalyst, and subsequently adding said one or more acrylate compounds.

64. The method of item 62, comprising mixing said one or more acrylate compounds with said tertiary amine curing catalyst, and subsequently adding said one or more acetoacetate ester compounds.

65. Use of the binder system of any one of items 58 to 61 for preparing a resin.

66. The use of item 65, wherein the preparation of said resin comprises curing of the resin.

67. A binder system comprising one or more acetoacetate ester compounds, one or more acrylate compounds and a tertiary amine curing catalyst, wherein the one or more acetoacetate ester compound comprises 4,8-bis(hydroxymethyl)tricyclo[5.2.1.0$^{2,6}$]decane diacetoacetate, the one or more acrylate compound comprises trimethylolpropane triacrylate and the tertiary amine curing catalyst is 1,1,3,3-tetramethylguanidine (TMG).

68. The binder system of item 67, wherein the one or more acetoacetate ester compound comprises 4,8-bis(hydroxymethyl)tricyclo[5.2.1.0$^{2,6}$]decane diacetoacetate, the one or more acrylate compound comprises trimethylolpropane triacrylate and the tertiary amine curing catalyst is 1,1,3,3-tetramethylguanidine (TMG), and wherein the functional group ratio of the functional groups of said one or more acetoacetate ester and of the functional groups of said one or more acrylate is from 0.3 to 0.75.

69. The binder system of item 67 to 68, wherein the acetoacetate ester compound is 4,8-bis(hydroxymethyl)tricyclo[5.2.1.0$^{2,6}$]decane diacetoacetate, the acrylate compound is trimethylolpropane triacrylate and the tertiary amine curing catalyst is TMG.

70. The binder system of any one of items 67 to 69, wherein the amount of said tertiary amine curing catalyst in said binder system ranges from 0.1% (w/w) to 14% (w/w), from 0.2% (w/w) to 10% (w/w), from 0.3% (w/w) to 5% (w/w), from 0.4% (w/w) to 2.5% (w/w), from 0.5% (w/w) to 2.0% (w/w) or from 0.7% (w/w) to 1.5% (w/w) relative to the totality of the amount of the one or more acetoacetate ester compound and the one or more acrylate compound.

71. A method of preparing the binder system of any one items 67 to 70, comprising mixing said one or more acetoacetate ester compounds and said one or more acrylate compounds and said tertiary amine curing catalyst.

72. The method of item 71, comprising mixing said one or more acetoacetate ester compounds with said tertiary amine curing catalyst, and subsequently adding said one or more acrylate compounds.

73. The method of item 71, comprising mixing said one or more acrylate compounds with said tertiary amine curing catalyst, and subsequently adding said one or more acetoacetate ester compounds.

74. Use of the binder system of any one of items 67 to 70 for preparing a resin.

75. The use of item 74, wherein the preparation of said resin comprises curing of the resin.

The invention also relates to the following items

1. A method for preparation of fiber reinforced parts comprising the steps of

(a) contacting a fiber with a resin composition to provide a fiber resin composition; and

(b) curing said fiber resin composition to provide the fiber reinforced part;

wherein
the resin composition comprises

- one or more acetoacetate ester compounds comprising at least two acetoacetate ester functional groups,
- one or more acrylate compound comprising at least two acrylate functional groups, and
- a tertiary amine curing catalyst;

wherein
the fiber resin composition is shaped in step (a), in step (b) or in both steps.

2. Method according to item 1, wherein
the one or more acetoacetate ester compounds are independently selected from the group consisting of 1,4-butanediol diacetoacetate, 1,6-hexanediol diacetoacetate, neopentyl glycol diacetoacetate, the diacetoacetate of 4,8-bis(hydroxymethyl)tricyclo [5.2.1.0$^{2,6}$]decane, 2-methyl-1,3-propanediol diacetoacetate, mono-, di-, tri- and tetraethylene glycol diacetoacetate, polyethylene glycol diacetoacetate, mono-, di-, tri- and tetrapropylene glycol diacetoacetate, polypropylene glycol diacetoacetate, cyclohexane dimethanol diacetoacetate, trimethylolethane triacetoacetate, trimethylolpropane triacetoacetate, ethoxylated trimethylolethane triacetoactate, propoxylated trimethylolethane triacetoactate, ethoxylated trimethylolpropanetriacetoactate, propoxylated trimethylolpropanetriacetoactate, pentaerythritol triacetoacetate, glycerol triacetoacetate, di(trimethylolpropane) tetraacetoacetate, pentaerythritol tetraacetoacetate, dipentaerythritol pentaacetoacetate, dipentaerythritol hexaacetoacetate, acetoacetylated polyvinyl alcohols, acetoacetylated polyester resins, decaglycerol deca-(Z)-oleate and acetoacetate esters of alcohols such as isosorbide, glucose and 4,8-bis(hydroxymethyl)tricyclo[5.2.1.0$^{2,6}$]decane.

3. Method according to item 1 or 2, wherein
the one or more acetoacetate ester compounds are independently selected from the group consisting of trimethylolpropane triacetoacetate, glycerol triacetoacetate and ethylene glycol diacetoacetate..

4. Method according to one or more of items 1 to 3, wherein
the acetoacetate ester compound is trimethylolpropane triacetoacetate or glycerol triacetoacetate.

5. Method according to one or more of items 1 to 4, wherein
the one or more acrylate compounds are independently selected from the group consisting of 1,4-butanediol diacrylate, 1,6-hexanediol diacrylate, neopentyl glycol diacrylate, the diacrylate of 4,8-bis(hydroxymethyl)tricyclo[5.2.1.0$^{2,6}$]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer.

6. Method according to one or more of items 1 to 5, wherein
the one or more acrylate compounds are independently selected from the group consisting of tripropylene glycol diacrylate, trimethylolpropane triacrylate and di(trimethylolpropane) tetraacrylate

7. Method according to one or more of items 1 to 6, wherein
the acrylate compound is trimethylolpropane triacrylate.

8. Method according to one or more of items 1 to 7, wherein
the one or more amine curing catalysts are independently selected from the group consisting of 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) and 1,5-Diazabicyclo(4.3.0)non-5-ene (DBN).

9. Method according to one or more of items 1 to 8, wherein
the one or more amine curing catalyst is selected from TMG and DABCO.

10. Method according to one or more of items 1 to 9, wherein
the amine curing catalyst is TMG.

11. Method according to one or more of items 1 to 10, wherein
the one or more fiber or fibre reinforcement materials are independently selected from the group consisting of carbon, glass, aramide, polyester, polyolefins, nylon, natural fibers, basalt, steel, aluminum, copper and zinc.

12. Method according to one or more of items 1 to 11, wherein
the acetoacetate ester compound comprises trimethylolpropane triacetoacetate or glycerol triacetoacetate;
the acrylate compound comprises trimethylolpropane triacrylate; and
the amine curing catalyst comprises TMG or DABCO, or a combination thereof.

13. Method according to one or more of items 1 to 12, wherein
the functional group ratio of the acetoacetate ester compound to the functional group ratio of the acrylate compound is from 0.15 to 1.50.

14. Method according to one or more of items 1 to 13, wherein
the method for the preparation of the fiber reinforced parts as defined in one or more of items 1 to 13 is a Resin Transfer Molding process, a Vacuum Infusion process, a Continuous Filament Impregnation process, a Filament Winding process, a Wet Compression Molding process or a Pultrusion process.

15. A kit for forming a fiber resin composition to be used in the method as defined in one or more of items 1 to 14, the kit comprising:

• an acetoacetate ester compound, an acrylate compound, an amine curing catalyst and a fiber; or

- premix A comprising an acrylate compound and an amine curing catalyst, an acetoacetate ester compound and a fiber; or
- premix B comprising an acetoacetate ester compound and an amine curing catalyst, an acrylate compound and a fiber;
- premix C comprising an acetoacetate ester compound and an acrylate compound, an amine curing catalyst and a fiber;

wherein the fiber resin composition, the acetoacetate ester compound, the acrylate compound, the amine curing catalyst and the fiber as defined in one or more of items 1 to 14.

16. The fiber resin composition or the fiber reinforced part as defined in item 1.

17. A fiber reinforced part prepared by the method as defined in item 1.

## EXAMPLES

### Abbrevations

Pas Pascal times second, can also be denoted as Pa*s
RPM rounds per minute
RT room temperature, ambient temperature
wt% percent by weight

### Materials

| | |
|---|---|
| AATMP | Trimethylolpropane trisacetoacetate, CAS 22208-25-9, Lonzamon™ AATMP, Lonza Ltd, 3930 Visp, Switzerland; Gardener value <= 6 |
| TMG | 1,1,3,3-Tetramethylguanidine, CAS 80-70-6, Lonza Ltd, 3930 Visp, Switzerland |
| TMPTA | Trimethylolpropane triacrylate, CAS 15625-89-5, Laromer® TMPTA, BASF, 67056 Ludwigshafen, Germany |
| Frekote® 770 NC | Mold release agent (MRA) was obtained from Henkel, 40589 Düsseldorf, Germany |
| SGL KDK 8045 | Carbon fiber reinforcement material obtained from SGL TECHNOLOGIES GmbH, 65203 Wiesbaden, Germany used within Resin Transfer Molding process (FR-RTM), and Wet Compression Molding process (FR-WCM) (Weave Twill 2/2, weight 400 g/m$^2$, width 120 cm, Thread count warp and weft: 5 per cm, Fineness of yarn warp and weft: 400 tex, thickness: fabric 0.50 mm and laminate 0.45 mm) |
| Grafil 34-700 | Carbon fiber reinforcement material (Grafil 34-700 carbon fiber, 24 k, 1600 [tex]) obtained from MITSUBISHI RAYON CARBON FIBER & COMPOSITES, Sacramento, CA 95828, USA for use in Filament winding process (FR-FILWIN) |
| HexForce® 01202 1000 TF970 | Glass fiber reinforcement material (HexForce® 01202 1000 TF970) obtained from Hexcel Corporation, Stamford, CT 06901, USA for use in Vacuum infusion process (FR-VACINF)<br><br>Description:<br>Type of yarns     Warp : [EC9 68] X 3<br>         Weft: EC9 204<br>Nominal weight     290 g/m$^2$ 8.55 oz/sqy$^2$<br>Weave style     twill 2x2<br>Width     1000 mm 39.4 in<br>Finish type     TF970 |

(continued)

| | Finish description | Silane | |
|---|---|---|---|
| | Characteristics: | | |
| | Nominal construction | Warp : 7 yarn/cm | 17.9 yarn/in |
| | | Weft: 7.2 picks/cm | 18.4 picks/in |
| | Weight distribution | Warp : 50 % | |
| | | Weft: 50 % | |
| | Thickness (*) | 0.23 mm 0.009 in | |
| | (*): The above average value is obtained with epoxy laminate at 55% of fibers in volume | | |
| InfTherm | Powerfix Infrared Th ermometer | | |

## Methods

### Gardener Color number

**[0213]** The Gardener Color number (also called herein Gardener value) is defined in DIN ISO 4630, the values 1 to 8 are based on potassium chloro palatinate solutions, the values 9 to 18 on Fe(III) chloride, Co(II) chloride and HCl solutions.

The Gardener value was determined using a LICO 400 instrument from Dr. Bruno Lange GmbH together with a 50 mm cuvette. The system was calibrated using ionized water. For the measurement, the 50 mm cuvette was filled with the sample of interest and the measurement is done.

### Viscosity ($\eta$)

Instrument: Rheometer MCR 302, Anton Paar, 8054 Graz, Austria

Description of typical experiment:

The rheometer was equipped with a coaxial cylinder (CC) system with a measuring bob diameter of 27 mm (measuring system CC27/T200/SS with cylinder B-CC27/Q1 and beaker C-CC27/T200/SS, standard: ISO 3219 (delta <= 1.2)). The chosen temperature in the range from 0 °C to 50 °C was controlled by a Peltier control unit (C-PTD200 for cylindrical measuring systems, temperature range -30 to 200 °C). Viscosities were recorded at shear rates of 1, 1.67, 2.78, 4.64, 7.74, 12.9, 21.5, 35.9, 59.9 and 100 $S^{-1}$ (logarithmic distribution between start and end point of 1 and 100 $S^{-1}$). The reported viscosity was calculated as the average value of these 10 shear rates.

### Glass transition temperature Tg

The glass transition temperature is the temperature, at which the physical properties of a polymeric materials change from amorphous rigid, glassy or crystalline state to a flexible rubbery state. The glass transition temperature Tg is measured by dynamical mechanical thermal analysis (DMTA) and can be given as the Tan Delta Peak.

The glass transition temperature $T_g$ was measured by Thermal Mechanical Analysis (TMA). The machine used was a Mettler Toledo instrument TMA SDTA840. The sample dimensions were 6 times 6 $mm^2$ (length times width) and 4 to 4.5 mm thickness. The test method applied two heating ramps (first ramp: 25 to 120 °C at 10 K/min and a second ramp 25 to 150 °C at 10 K/min). The $T_g$ was evaluated on the second ramp.

It is preferred that the Tg is >/= to 90 °C, more preferably >/= to 100 °C. For some applications (e.g. parts that will be exposed to higher temps) higher Tgs are even more preferred.

### Shore A Hardness

Shore A hardness values were measured with a digital CV Shore Durometer (www.bowersgroup.co.uk).
Needle used: D 0.79 mm with 35°
Loading forces: 1.812 lb (822 g)
Maximum penetration is 0.097 to 0.1 inch (2.5 to 2.54 mm)

The durometer was standing on a flat solid surface. The measurement was done at ambient temperature.

1. The sample was placed on the base of the durometer

2. The position of the sample was changed so that the needle of the gauge was at least 8 to 10 mm from the edge of the sample

3. The sample was made sure not to wiggle and not to stand skewed.

4. With the lever on the right side of the gauge needle, the needle was pressed against the surface of the sample. The lever was pushed the whole way down to the stopper, in order to ensure the complete weight has been applied onto the gauge needle.

5. The result has been checked on the gauge display. The result has been recorded after the number of the gauge had settled to a stable value.

6. The measurement has been repeated 3 times at different spots which have been at least 6 mm away from each other.

7. The average Shore A value has been calculated from these 3 measured values and reported.

**Example 1** - **Qualitative break test comparison of foundry shapes comprising AA-TMP, AA-Gly or AA-EG acetoacetate ester compounds, polymerized with TMPTA**

Three compositions comprising sand as the foundry aggregate (white quartz, 50 to 70 mesh particle size, Sigma-Aldrich), and each comprising different acetoacetate ester compounds (trimethylolpropane triacetoacetate (AA-TMP), glycerol triacetoacetate (AA-Gly) or ethylene glycol diacetoacetate (AA-EG)), together with TMPTA (trimethylolpropane triacrylate) as the acrylate compound (with a functional group ratio of 0.5 of acetoacetate ester compound to acrylate compound) and 1,1,3,3-tetramethylguanidine (TMG) as the tertiary amine curing catalyst were prepared as follows.

The acetoacetate ester and the acrylate were dissolved in acetone. To this solution the sand was added. After mixing, the acetone was removed using a rotatory evaporator. The amount of acetone used was approximately equivalent to the amount of sand (weight to weight). While the use of acetone may generally facilitate the coating of the foundry aggregate (here: sand) with the components of the resin formulation, the inventors have observed that the use of acetone is by no means necessary, i.e., the resin formulations according to the invention can also be mixed with the foundry aggregate (here: sand) without using any solvent. Following this procedure, three different relative amounts of each resin formulation (acetoacetate ester and acrylate compound) relative to sand were tested (1:10, 1:20 and 1:30 (w/w)). The resulting foundry mix was filled into a form which was placed in a chamber connected to a gasifier. The form was 55 mm in diameter, having an internal height of 8 mm. The bottom of the form was punctured to allow for a gas stream to pass through the foundry mix. Curing was initiated by heating TMG to 60-65 °C and passing a stream of gaseous TMG, carried by a stream of nitrogen gas into the chamber. The stream of inert gas, carrying the stream of TMG was directed through the foundry mix thus forcing the TMG through the foundry mix. After 2 hours of curing the foundry shapes had sufficient strength that the foundry shapes could be removed from the form and be used for qualitative break tests.

For the qualitative break tests, the samples were positioned as a bridge between two stands and a V-profile attached to the bottom of a water canister was placed on top of the samples. The canister was filled with water, until the samples lost their structural integrity. The results of the qualitative break test are summarized in Figure 1 (applied amount of water [kg] until structural integrity is lost versus relative amount of binder system to foundry aggregate).

All tested binder systems provided a high degree of bonding strength. The physical strength of the tested foundry shapes increased in a linear fashion with increasing amount of resin formulation relative to sand. The tests further showed that efficient curing occurred even if the sand was not absolutely dry, and the minor amounts of water apparently did not interfere with the curing reaction so that the cured foundry shapes exhibited good mechanical strength against breaking (see Fig. 1).

**Example 2** - **Optimization of the amounts of acetoacetate ester compound to acrylate compound in terms of functional group ratio**

To identify a suitable range of acetoacetate ester to acrylate in terms of their functional group ratios, a number of neat resins were tested, comprising different acrylate compounds and acetoacetate ester compounds in varying compositions.

The experiments were carried out on a 12 g scale. The acrylate compound was thoroughly mixed with TMG. Then the acetoacetate compound was added, and the resulting mixture thoroughly mixed for about 15 seconds. This mixture was poured into an aluminum cup and the neat resin allowed to cure at room temperature to hardness. During the curing, the gel-time was observed qualitatively by probing into the mixture with a needle. The hardness was measured after the physical appearance (aspect) of the samples was constant. This was normally the case after curing for 12 to 16 hours. Complete curing generally took 2-3 days (assessed by measuring Shore A hardness by daily measurements).

Shore A hardness values were measured with a digital CV Shore Durometer (www.bowersgroup.co.uk/).

In a first set of experiments (Example 2A) glycerol triacetoacetate (AA-Gly) was used as the acetoacetate ester compound in combination with three different acrylate compounds (di(trimethylolpropane) tetraacrylate (DTMtetraA), TMPTA or 1,6-hexanediol diacrylate (HDODA)). TMG was used as curing catalyst.

The hardness (shore A) of the cured neat resins is shown in Table 2 ("FGR" refers to functional group ratio of acetoacetate ester functional group(s) (A) and acrylate functional group(s) (B)).

**Table 2: Compositions of Example 2A**

| Acetoacetate | Acrylate | FGR | TMG Catalyst | hardness |
|---|---|---|---|---|
| | | [A/B] | [wt%] | [Shore A] |
| AA-Gly | TMPTA | 2,3 | 0,8 | 1 |
| AA-Gly | TMPTA | 1,1 | 0,5 | 66 |
| AA-Gly | TMPTA | 1,1 | 1,5 | 76 |
| AA-Gly | TMPTA | 2,3 | 1,5 | 1 |
| AA-Gly | TMPTA | 1,3 | 0,8 | 59 |
| AA-Gly | TMPTA | 0,7 | 1,3 | 97 |
| AA-Gly | TMPTA | 0,6 | 0,9 | 91 |
| AA-Gly | TMPTA | 0,6 | 0,9 | 95 |
| AA-Gly | HDODA | 1,4 | 1,0 | 44 |
| AA-Gly | HDODA | 0,9 | 0,5 | 76 |
| AA-Gly | HDODA | 1,2 | 1,5 | 57 |
| AA-Gly | HDODA | 0,4 | 1,0 | 88 |
| AA-Gly | HDODA | 1,4 | 1,0 | 42 |
| AA-Gly | HDODA | 0,2 | 1,0 | 30 |
| AA-Gly | DTMtetra | 2,8 | 0,8 | 1 |
| AA-Gly | DTMtetra | 0,3 | 0,5 | 98 |
| AA-Gly | DTMtetra | 2,8 | 0,8 | 1 |
| AA-Gly | DTMtetra | 0,6 | 1,3 | 92 |
| AA-Gly | DTMtetra | 1,3 | 0,5 | 63 |
| AA-Gly | DTMtetra | 0,7 | 0,8 | 96 |
| AA-Gly | DTMtetra | 2,7 | 1,5 | 1 |
| AA-Gly | DTMtetra | 0,3 | 0,5 | 96 |
| AA-Gly | DTMtetra | 0,7 | 1,5 | 92 |
| AA-Gly | DTMtetra | 1,6 | 0,8 | 72 |
| AA-Gly | DTMtetra | 0,3 | 1,5 | 90 |

In a second set of experiments (Example 2B), TMPTA was used as the acrylate compound in combination with three different acetoacetate ester compounds (AA-EG, AA-TMP or AA-Gly). TMG was used as curing catalyst. The resins were prepared according to the procedure described above. The hardness (shore A) of the cured neat resins is shown in Table 3.

**Table 3: Compositions of Example 2B**

| Acetoacetate | Acrylate | FGR | TMG Catalyst | hardness |
|---|---|---|---|---|
| | | [A/B] | [wt%] | [Shore A] |
| AA-Gly | TMPTA | 2,3 | 0,8 | 1 |
| AA-Gly | TMPTA | 1,1 | 0,5 | 66 |
| AA-Gly | TMPTA | 1,1 | 1,5 | 76 |
| AA-Gly | TMPTA | 2,3 | 1,5 | 1 |
| AA-Gly | TMPTA | 1,3 | 0,8 | 59 |
| AA-Gly | TMPTA | 0,7 | 1,3 | 97 |
| AA-Gly | TMPTA | 0,6 | 0,9 | 95 |
| AA-EG | TMPTA | 1,6 | 1,3 | 57 |
| AA-EG | TMPTA | 1,1 | 0,5 | 83 |
| AA-EG | TMPTA | 0,5 | 1,0 | 96 |
| AA-EG | TMPTA | 0,7 | 1,3 | 93 |
| AA-EG | TMPTA | 0,5 | 1,5 | 98 |
| AA-EG | TMPTA | 1,6 | 1,3 | 49 |
| AA-EG | TMPTA | 0,5 | 0,5 | 97 |
| AA-EG | TMPTA | 2,5 | 0,5 | 2 |
| AA-EG | TMPTA | 0,5 | 1,0 | 96 |
| AA-EG | TMPTA | 0,4 | 0,8 | 97 |
| AA-EG | TMPTA | 3,2 | 0,8 | 2 |
| AATMP | TMPTA | 2,1 | 1,3 | 4 |
| AATMP | TMPTA | 0,5 | 0,5 | 93 |
| AATMP | TMPTA | 2,1 | 1,0 | 6 |
| AATMP | TMPTA | 1,3 | 1,3 | 60 |
| AATMP | TMPTA | 2,1 | 0,5 | 47 |
| AATMP | TMPTA | 0,7 | 0,5 | 97 |
| AATMP | TMPTA | 1,7 | 0,8 | 60 |
| AATMP | TMPTA | 1,0 | 0,8 | 76 |

Hardness of the cured neat resin is an indicator for the tensile strength of a foundry shape produced using the same binder system.

**Example** 3 - Correlation of hardness and amount of curing catalyst

Various amounts of TMG were tested in combination with a resin formulation comprising TMPTA as the acrylate compound in combination with AA-Gly as the acetoacetate ester compound. The functional group ratio of acetoacetate ester compound to acrylate compound was about 0.8. The neat resins were prepared as described in Example 2. The final hardness of the resulting resin was recorded as a function of the amount of TMG (Figure 2). Shore A hardness values were measured with a digital CV Shore Durometer (www.bowersgroup.co.uk/).

The hardness of the cured resins rapidly increased with the amount of TMG catalyst until reaching a maximum at an amount of TMG of about 0.75 % (w/w). This shows that TMG is highly efficient in catalyzing the curing reaction in a resin formulation according to the invention comprising an acetoacetate ester compound and an acrylate compound. Surprisingly low amounts of TMG are sufficient to effect complete curing and for achieving good hardness of the cured resin.

Whilst a similar hardness could be achieved with amounts of TMG substantially higher than 0.75, undesired side effects could be observed, for example hot spots or unregular polymerization.

**Example 4 - Characterization of binder systems**

The amounts of acetoacetate ester compound, acrylate compound and tertiary amine curing catalyst were varied over a broad range. Glycerol triacetoacetate (AA-Gly) was used as the acetoacetate ester compound, trimethylolpropane triacrylate (TMPTA) as the acrylate compound and 1,1,3,3-tetramethylguanidine (TMG) as the tertiary amine curing catalyst.

The neat resins were prepared as described in Example 2.

The gel time was recorded and hardness (shore A) of the samples tested one week after the curing reaction was initiated to ensure that curing had been completed. "Gel time" as used herein refers to the time point at which a curing resin, under isothermal and isobaric conditions, changes from a liquid to a solid state. The gel time of a resin may be readily determined by known methods, e.g. DIN 16945 or DIN EIN ISO 9396. Shore A hardness values were measured with a digital CV Shore Durometer (www.bowersgroup.co.uk/). The appearance of the cured resins was evaluated according to the appearance scale below at 24 hours and one week after initiation of the curing reaction.

Physical Appearance ("aspect")

0    no change
1    viscous
2    sticky / highly viscous
3    slight gelling / gelling initiates
4    gelling
5    partially solid
6    mostly solid
7    solid / like soft rubber
8    solid / like hard rubber
9    solid / like glass, dull sound
10   solid / like glass, bright sound

The results are summarized in Table 4 below.

**Table 4: Compositions of the binder systems of Example 4**

| Acetoacetate A | Acrylate B | A/B FGR | TMG wt% | Gel-time [min] | Hardness [Shore A] | Aspect 24 h | Aspect 1 week |
|---|---|---|---|---|---|---|---|
| AA-Gly | TMPTA | 0,5 | 0,35 | 317 | 84 | 7 | 8 |
| AA-Gly | TMPTA | 0,6 | 0,6 | 83 | 96 | 9,5 | 10 |
| AA-Gly | TMPTA | 0,8 | 0,35 | 1320 | 68 | 4 | 7 |
| AA-Gly | TMPTA | 0,5 | 0,6 | 80 | 98 | 9,5 | 10 |
| AA-Gly | TMPTA | 0,6 | 0,8 | 50 | 96 | 10 | 10 |
| AA-Gly | TMPTA | 0,7 | 0,35 | 1320 | 71 | 4 | 8 |
| AA-Gly | TMPTA | 0,8 | 0,6 | 420 | 93 | 8 | 10 |
| AA-Gly | TMPTA | 0,5 | 0,8 | 34 | 98 | 10 | 10 |
| AA-Gly | TMPTA | 0,6 | 0,35 | 4000 | 83 | 0 | 8 |
| AA-Gly | TMPTA | 0,7 | 0,6 | 1320 | 77 | 6,5 | 8 |
| AA-Gly | TMPTA | 0,8 | 0,8 | 134 | 98 | 8 | 10 |
| AA-Gly | TMPTA | 0,7 | 0,8 | 41 | 96 | 10 | 10 |

Very low amounts of TMG were sufficient to achieve short gel times for a range of different acetoacetate ester to acrylate functional group ratios. Higher amounts of TMG generally resulted in an increase in hardness and a reduction of curing time.

**Example 5** - **Method resin transfer molding - Carbon fiber reinforced Hat-Profile produced by resin transfer molding**

The carbon-reinforced hat-profile was produced as described in table 5, which shows the complete cure cycle.

|  | Table 5 | |
|---|---|---|
| **Step** | **Time [min]** | **Action** |
| 1 | Before mixing all three resin components | The surface of the mold set was coated with mold release agent Frekote® 770 NC (MRA) |
| 2 | Before mixing all three resin components | the carbon fiber reinformcement material SGL KDK 8045 with the dimension 280 x 650 mm was placed in the cavity of the temperature controlled mold, the mold was closed and clamped. |
| 3 | Before mixing all three resin components | 6 g TMG (25°C) were mixed with 54 g TMPTA (10°C) to provide premix A-I |
| 4 | Before mixing all three resin components | 40.3 g of premix A-I were mixed with 1220 g TMPTA (10°C) to provide premix A-II |
| 5 | 0 (Start of curing) | Premix A-II was mixed with 740.1 g AATMP (10 °C) to provide the resin composition (10 °C); the resin composition was stirred |
| 6 | 2 | Mixing was completed and the resin composition was transferred to a vacuum pot for degassing, degassing was started; degassing was done at 2.6 mbar |
| 7 | 6 | Degassing was completed; the resin composition was transferred to a reservoir |
| 8 | 8 | Injection start of the resin composition from the reservoir into the mold cavity with an injection pressure of 1 bar and with the mold set at begin of injection having ambient temperature |
| 9 | 10 | injection pressure was increased to 2 bar |
| 10 | 12 | injection pressure was increased to 3 bar |
| 11 | 14 | injection pressure was increased to 4 bar |
| 12 | 16 | injection pressure was increased to 6 bar |
| 13 | 25 | Injection was completed and mold set was heated to 80 °C within 3 h. The temperature was kept at 80 °C for about 2.5 h. Then, the mold was cooled to 50 °C within 1.5 h. |
| 14 | ca. 445 | The reinforced part was demolded at 50°C |

A summary of the technical parameters is provided in table 6.

| Table 6 | |
|---|---|
| **Parameters** | **Values** |
| AATMP | 740.1 g (37.0 wt%, 1.9 mol) |
| TMPTA | 1256.3 g (62.8 wt%, 4.2 mol) |
| TMG | 4 g (0.2 wt%) |
| FGR | 0.45 |

(continued)

| Table 6 | |
|---|---|
| Parameters | Values |
| Injection temperature of resin composition | ca. 17 °C (measured directly after degassing with Powerfix Infrared Thermometer) |
| Temperature program after injection was completed | 0 to 180 min heated to 80 °C<br>180 to 330 min at 80 °C<br>330 to 420 min cooled to 50 °C |

After the cure cycle was completed, the fiber reinforced part could be demolded without distortion. The fiber reinforced part showed a flat surface with very low warpage and very low fiber-fingerprint. The easy demolding of the hat-profile together with the very low fiber-fingerprint revealed a low volumetric shrinkage of this resin. By visual inspection of the fiber reinforced part no embedded voids could be observed in the fiber reinforced part.

On visual inspection the fiber reinforced part showed no change of color compared to the substrates.

**Viscosity**

The viscosity ($\eta$) of a mixture containing 37 wt% of AATMP and 63 wt% of TMPTA at 20 °C was determined with 212 mPas.

**Example 6** - Method Vacuum Infusion - Glass fiber reinforced plate produced by Vacuum Infusion

The glass fiber reinforcement material (HexForce® 01202 1000 TF970) was placed onto a plate; the area of the plate that was going to be in contact with the glass fiber reinforcement material (HexForce® 01202 1000 TF970) was coated with the mold release agent Frekote® 770 NC prior to placing the glass fiber reinforcement material onto the plate. A sealing was applied onto the perimeter of the plate around glass fiber reinforcement material (HexForce® 01202 1000 TF970), and a vacuum foil was placed and sealed over the HexForce® 01202 1000 TF970. The vacuum foil had an inlet for a feed line and an outlet where the vacuum was applied.

A vacuum pump was used to evacuate the air out of the HexForce® 01202 1000 TF970in order to create and maintain a vacuum in the empty cavity of the HexForce® 01202 1000 TF970.

The resin composition was sucked into the cavity of glass fiber reinforcement material (HexForce® 01202 1000 TF970) from a resin infusion reservoir via the feed line until the cavity of the glass fiber reinforcement material is completely filled. The vacuum was maintained until visually a good distribution of the resin over the glass fiber reinforcement material (HexForce® 01202 1000 TF970) was observed.

The glass fiber reinforced plate was produced as described in table 7, which shows the complete cure cycle.

| | Table 7 | |
|---|---|---|
| Step | Time [min] | Action |
| 1 | Before mixing all three resin components | The surface of the area of the temperature controlled plate, which was to receive the glass fiber reinforcement material (HexForce® 01202 1000 TF970), was coated with mold release agent Frekote® 770 NC , the HexForce® 01202 1000 TF970was placed upon the coated area and was sealed with the vacuum foil.<br>The cavity of the glass fiber reinforcement material (HexForce® 01202 1000 TF970) was evacuated by applying a vacuum by means of a vacuum pump; between the HexForce® 01202 1000 TF970and the vacuum pump a resin trap was installed. |
| 2 | Before mixing all three resin components | 10.0 g TMG were mixed with 89.9 g TMPTA to provide premix A-I |
| 3 | Before mixing all three resin components | 20.2 g of premix A-I were mixed with 610.1 g TMPTA to provide premix A-II |
| 4 | 0 (Curing start) | Premix A-II was mixed with 370.8 g AATMP to provide the resin composition was stirred. |

(continued)

|  | Table 7 |  |
|---|---|---|
| Step | Time [min] | Action |
| 5 | 2 | Mixing was completed and the resin composition was transferred to a vacuum pot for degassing, degassing was started; degassing was done at 2.6 mbar |
| 6 | 7 | Degassing was completed; the resin composition was transferred to the resin infusion reservoir which was connected by a feed line with the glass fiber reinforcement material (HexForce® 01202 1000 TF970) sealed under the vacuum foil. |
| 7 | 10 | Infusion started |
| 8 | 21 | Infusion stopped when the viscosity of the resin composition had become too high to flow through the feed line any more, and the feed line was closed. |
| 9 | 26 | Outlet to the resin trap was closed in order to stop applying vacuum. The plate was heated from ambient temperature to 64 °C within 4 h. The temperature was kept at 64 °C for 9 h followed by cooling the plate to 50 °C within 2 h. |
| 10 | after approx. 15.5 hours | The fiber reinforced part was demolded at around 50°C |

A summary of the technical parameters is provided in table 8.

| Table 8 | |
|---|---|
| AATMP | 370.8 g (37.0 wt%, 0.96 mol) |
| TMPTA | 628.3 g (62.8 wt%, 2.12 mol) |
| FGR | 0.45 |
| TMG | 2.02 g (0.2 wt%) |
| Degassing-time / pressure | 5 min / 2.6 mbar |
| mold temperature at the beginning of the infusion | ambient temperature |
| vacuum applied by pump during infusion / infusion time | 10 mbar / 11 min |

After the cure cycle was completed the fiber reinforced part could be demolded without distortion. The fiber reinforced part showed a flat surface with very low fiber-fingerprint. By visual inspection of the fiber reinforced part no embedded voids could be observed in the fiber reinforced part. On visual inspection the fiber reinforced part showed no change of color compared to the substrates.

**Example 7** - **Method Filament Winding** - **Carbon fiber reinforced roll produced by Filament Winding**

The impregnation of the carbon fiber reinforcement material (Grafil 34-700) with the resin composition was done in an open bath. Before the impregnation the carbon fibers (carbon fiber reinforcement material (Grafil 34-700)) in the fiber bundle of the roving were spread out in order to completely wet the individual carbon fiber filaments of the roving.
After having passed the open bath, a filament winding apparatus then wound the resin-impregnated and tensioned carbon fibers, tensioned with a roving pull force, while bundling the spread out carbon fibers back simultaneously into a bundle, around a mandrel.
The carbon fiber reinforced roll was produced as described in table 9, which shows the complete cure cycle.

|  | Table 9 |  |
|---|---|---|
| Step | Time [min] | Action |
| 1 | Before mixing all three resin components | 6.0 g TMG were mixed with 53.9 g TMPTA to provide premix A-I |

(continued)

| Step | Time [min] | Action |
|---|---|---|
| | Table 9 | |
| 2 | Before mixing all three resin components | 20.2 g of premix A-I was mixed with 611.1 g TMPTA to provide premix A-II |
| 3 | 0 (Curing start) | Premix A-II was mixed with 371.1 g AATMP to form the resin composition; resin composition was stirred. |
| 4 | 2 | Mixing was completed and the resin composition was transferred into the resin bath; the mandrel was coated with a small layer of the resin composition, one end of the carbon fiber reinforcement material (Grafil 34-700) was pulled through the resin bath and was placed on the mandrel |
| 5 | 4 | The winding was started using a winding speed of 20 m/min |
| 6 | 7 | Refill of the resin bath with ca. 500 g of freshly mixed resin composition |
| 7 | 10 | Refill of the resin bath with ca. 500 g of freshly mixed resin composition |
| 8 | 22 | Winding process was stopped providing a roll (fiber reinforced part) with a laminate thickness of about 10 mm |
| 9 | 25 | The roll on the mandrel was kept for procuring for 1h at RT (Precure) |
| 10 | 85 | The roll on the mandrel was transferred into an oven for curing for 12 h at 80 °C |
| 10 | 805 | Detaching of the roll (fiber reinforced part) from the mandrel at ambient temperature |

A summary of the technical parameters is provided in table 10.

| Table 10 | |
|---|---|
| Parameters | Values |
| AATMP | 371.1 g (37.0 wt%, 0.96 mol) |
| TMPTA | 629.3 g (62.8 wt%, 2.12 mol) |
| FGR | 0.45 |
| TMG | 2.02 (0.2 wt%) |
| Fiber orientation | 2° unidirectional |
| Roving pull force | 20 N |
| Mixing temperature | 10 to 20 °C |
| Impregnation bath temperature measure by Powerfix Infrared Thermometer during winding process | 20 to 30 °C |
| winding speed | 20 m/min |
| Mandrel diameter | 150 mm |
| Precure | 1 h at RT |
| Curing | 12 h at 80 °C |

After the curing the roll (fiber reinforced part) could be detached from the mandrel manually without effort or distortion and without the necessity of using a detachment apparatus.

On visual inspection the roll showed no change of color compared to the substrates.

**Example 8 - Method Wet compression molding - Carbon fiber reinforced part by** Wet **compression molding**

TMG (3.0 g) was mixed with TMPTA (27.1 g) to form a premix A-I. 16.05 g of this premix A_I were mixed with 488.34 g of TMPTA and 296.2 g of AATMP within 1 min. Then the first layer of the carbon fiber reinforcement material (SGL KDK 8045) was introduced into the cavity of a mold filling half of the area of the mold by placing the layer into the middle of the mold in order to have unfilled space in the mold into which any resin excess can flow out of the carbon fiber reinforcement material (SGL KDK 8045) when pressure is applied, followed by impregnation with ca. 40 g of resin composition, the impregnation was done by spreading manually the ca. 40 g of resin composition on this first layer using a paint brush. Then the next layer of the carbon fiber reinforcement material (SGL KDK 8045) was laid on top of the first layer, followed by a same impregnation with ca. 40 g of resin composition using the paint brush. This procedure was repeated until 12 layers of the carbon fiber reinforcement material (SGL KDK 8045) were laminated on top of each other and were fully impregnated. The mold was the closed, pressure and heating were applied to force any excess resin out of the carbon fiber reinforcement material (SGL KDK 8045) to fill up the cavity. The pressure and the heating were maintained for the time as given in table 11.

Then the pressing was done using the technical parameters shown in table 11.

| Table 11 | |
|---|---|
| **Parameters** | **Values** |
| AATMP | 37 wt% |
| TMPTA | 62.8 wt% |
| FGR | 0.45 |
| TMG | 0.2 wt% |
| Pressing pressure | 7 bar |
| dimension of SGL KDK 8045 | 340 x 240 mm |
| Cavity Size | 340 x 480 mm |
| Temperature program from the start of applying pressure | 0 to 25 min: heating from RT to 100 °C<br>25 to 115 min: maintaining 100 °C<br>115 to 140 min cooling from 100 °C to RT |

After the curing the carbon fiber reinforced part could be detached from the mold manually without effort or distortion and without the necessity of using a detachment apparatus.

On visual inspection the carbon fiber reinforced part showed no change of color compared to the substrates.

**Example 9**

**(A) Hardness and Tg after curing at ambient temperature**

4 samples were prepared as follows:

AATMP (4.44 g, 37 wt%) was added to a mixture of TMPTA (7.536 g, 62.8 wt%) and TMG (0.024 g, 0.2 wt%) at ambient temperature. After mixing the formulation was transferred to a round aluminum dish (diameter d = 6.5 cm) and were kept at ambient temperature at the specified time for curing. The hardness and the Tg of these 4 samples were measured after a curing time of 6 h (sample 1), 24 h (1 day, sample 2), 98 h (4 days, sample 3) and 192 h (8 days, sample 4). Table 12 gives the details.

The hardness of each sample was measured 5 times and the average of these five values is reported for each sample.

| Table 12 | | | |
|---|---|---|---|
| **Sample** | **Curing Time [h]** | **Hardness [Shore A]** | **Tg onset by TMA [°C]** |
| **1** | 6 | 75.4 | not determined |
| **2** | 24 | 96 | 45 °C |

(continued)

| Table 12 | | | |
|---|---|---|---|
| Sample | Curing Time [h] | Hardness [Shore A] | Tg onset by TMA [°C] |
| 3 | 98 | 97.3 | 55°C |
| 4 | 192 | 98.6 | 60°C |

**(B) Hardness and Tg after curing at 80°C**

AATMP (4.44 g, 37 wt%) was added to a mixture of TMPTA (7.536 g, 62.8 wt%) and TMG (0.024 g, 0.2 wt%) at ambient temperature. After mixing the formulation was transferred to a round aluminum dish (diameter d = 6.5 cm) and the dish was kept at ambient temperature for 24 h, then it was kept at 80 °C for 12 h for curing. The hardness and the Tg were measured after the curing. The hardness of the sample was measured 5 times and the average of the five values is reported.
Hardness: 98 Shore A
Tg onset (TMA): 65 to 70 °C

**Example 10 - Viscosity**

The viscosity of a mixture of AATMP (37 wt%) and TMPTA (63 wt%) was determined:

$\eta$ = 1573 mPas (0°C)
$\eta$ = 525 mPas (10°C)
$\eta$ = 212 mPas (20°C
$\eta$ = 101 mPas (30°C)
$\eta$ = 57 mPas (40°C)
$\eta$ = 33 mPas (50°C)

**ITEMS**

1. A method of preparing a foundry shape comprising the steps of

   i) mixing a foundry aggregate with a resin formulation to give a foundry mix, and
   ii) curing said foundry mix with a tertiary amine curing catalyst that is provided in the form of a gas and/or in a stream of an inert gas,

wherein said resin formulation comprises

   a) one or more acetoacetate ester compounds each comprising at least two acetoacetate ester functional groups, and
   b) one or more acrylate compounds each comprising at least two acrylate functional groups.

2. A method for preparation of fiber reinforced parts comprising the steps of

   (i) contacting a fiber with a resin composition to provide a fiber resin composition; and
   (ii) curing said fiber resin composition to provide the fiber reinforced part;

wherein the resin composition comprises

   a) one or more acetoacetate ester compounds comprising at least two acetoacetate ester functional groups,
   b) one or more acrylate compound comprising at least two acrylate functional groups, and
   c) a tertiary amine curing catalyst.

3. Method according to items 1 or 2, wherein

the one or more acetoacetate ester compounds are independently selected from the group consisting of 1,4-butanediol diacetoacetate, 1,6-hexanediol diacetoacetate, neopentyl glycol diacetoacetate, the diacetoacetate of 4,8-bis(hydroxymethyl)tricyclo [5.2.1.0$^{2,6}$]decane, 2-methyl-1,3-propanediol diacetoacetate, mono-, di-, tri- and tetraethylene glycol diacetoacetate, polyethylene glycol diacetoacetate, mono-, di-, tri- and tetrapropylene glycol diacetoacetate, polypropylene glycol diacetoacetate, cyclohexane dimethanol diacetoacetate, trimethylolethane triacetoacetate, trimethylolpropane triacetoacetate, ethoxylated trimethylolethane triacetoactate, propoxylated trimethylolethane triacetoactate, ethoxylated trimethylolpropanetriacetoactate, propoxylated trimethylolpropanetriacetoactate, pentaerythritol triacetoacetate, glycerol triacetoacetate, di(trimethylolpropane) tetraacetoacetate, pentaerythritol tetraacetoacetate, dipentaerythritol pentaacetoacetate, dipentaerythritol hexaacetoacetate, acetoacetylated polyvinyl alcohols, acetoacetylated polyester resins, decaglycerol deca-(Z)-oleate and an acetoacetate esters of alcohols such as isosorbide, glucose and 4,8-Bis(hydroxymethyl)tricyclo [5.2.1.0$^{2,6}$]-decane,

4. Method according to any one of the preceding items, wherein
the one or more acetoacetate ester compounds are independently selected from the group consisting of trimethylolpropane triacetoacetate, glycerol triacetoacetate and ethylene glycol diacetoacetate.

5. Method according to any one of the preceding items, wherein
the acetoacetate ester compound is trimethylolpropane triacetoacetate or ethylene glycol diacetoacetate.

6. Method according to any one of the preceding items, wherein
the one or more acrylate compounds are independently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.0$^{2,6}$]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer.

7. Method according to any one of the preceding items, wherein
the one or more acrylate compounds are independently selected from the group consisting of tripropylene glycol diacrylate, trimethylolpropane triacrylate and di(trimethylolpropane) tetraacrylate

8. Method according to any one of the preceding items, wherein
the acrylate compound is trimethylolpropane triacrylate.

9. Method according to any one of the preceding items, wherein
the one or more amine curing catalysts are independently selected from the group consisting of 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) and 1,5-Diazabicyclo(4.3.0)non-5-ene (DBN).

10. Method according to any one of the preceding items, wherein
the one or more amine curing catalyst is selected from TMG and DABCO.

11. Method according to any one of the preceding items, wherein
the amine curing catalyst is TMG.

12. Method according to any one of the preceding items, wherein
the acetoacetate ester compound comprises trimethylolpropane triacetoacetate or glycerol triacetoacetate;
the acrylate compound comprises trimethylolpropane triacrylate; and
the amine curing catalyst comprises TMG or DABCO, or a combination thereof.

13. Method according to any one of the preceding items, wherein
the functional group ratio of the acetoacetate ester compound to the functional group ratio of the acrylate compound is from 0.15 to 1.50.

14. Method according to items 2 to 13, wherein
the method for the preparation of the fiber reinforced parts as defined in one or more of items 2 to 13 is a Resin Transfer Molding process, a Vacuum Infusion process, a Continuous Filament Impregnation process, a Filament Winding process, a Wet Compression Molding process or a Pultrusion process.

15. Method according to items 2 to 14, wherein
the one or more fiber or fibre reinforcement materials are independently selected from the group consisting of carbon, glass, aramide, polyester, polyolefins, nylon, natural fibers, basalt, steel, aluminum, copper and zinc.

16. The method according to item 1, wherein the amount of the tertiary amine curing catalyst required for step ii) ranges from 0.2% (w/w) to 2.5% (w/w) relative to the amount of resin formulation used in step i), from 0.4% (w/w) to 2.0% (w/w), or from 0.7% (w/w) to 1.5% (w/w).

17. The method according to item 2, wherein the amount of the tertiary amine curing catalyst ranges from 0.01 to 10 wt%, from 0.05 to 7.5 wt%, from 0.05 to 5 wt%, from 0.05 to 2.5 wt%, from 0.05 to 1 wt%, from 0.05 to 0.75 wt%, from 0.075 to 0.5 wt%, or from 0.1 to 0.3 wt%.

18. A foundry shape prepared by the method according to any one of items 1 to 13 and 16.

19. Use of a resin formulation as defined in any one of items 1 to 13 or 16 in the method of item 1.

20. A kit for use in the method of item 1 comprising a resin formulation and a tertiary amine curing catalyst, wherein the resin formulation comprises one or more acetoacetate ester compound selected from the group consisting of trimethylolpropane triacetoacetate, glycerol triacetoacetate and ethylene glycol diacetoacetate, and trimethylolpropane triacrylate, wherein the tertiary amine curing catalyst is 1,1,3,3-tetramethylguanidine or DABCO.

21. A binder system comprising one or more acetoacetate ester compounds, one or more acrylate compounds and a tertiary amine curing catalyst, wherein the one or more acetoacetate ester compound comprises glycerol triacetoacetate, the one or more acrylate compound comprises trimethylolpropane triacrylate and the tertiary amine curing catalyst is 1,1,3,3-tetramethylguanidine (TMG).

22. A binder system comprising one or more acetoacetate ester compounds, one or more acrylate compounds and a tertiary amine curing catalyst, wherein the one or more acetoacetate ester compound comprises glycerol triacetoacetate, the one or more acrylate compound comprises trimethylolpropane triacrylate and the tertiary amine curing catalyst is 1,4-diazabicyclo[2.2.2]octane (DABCO).

23. A binder system comprising one or more acetoacetate ester compounds, one or more acrylate compounds and a tertiary amine curing catalyst, wherein the one or more acetoacetate ester compound comprises trimethylolpropane triacetoacetate, the one or more acrylate compound comprises trimethylolpropane triacrylate and the tertiary amine curing catalyst is 1,1,3,3-tetramethylguanidine (TMG).

24. A binder system comprising one or more acetoacetate ester compounds, one or more acrylate compounds and a tertiary amine curing catalyst, wherein the one or more acetoacetate ester compound comprises trimethylolpropane triacetoacetate, the one or more acrylate compound comprises trimethylolpropane triacrylate and the tertiary amine curing catalyst is 1,4-diazabicyclo[2.2.2]octane (DABCO).

25. A binder system comprising one or more acetoacetate ester compounds, one or more acrylate compounds and a tertiary amine curing catalyst, wherein the one or more acetoacetate ester compound comprises ethylene glycol diacetoacetate, the one or more acrylate compound comprises trimethylolpropane triacrylate and the tertiary amine curing catalyst is 1,1,3,3-tetramethylguanidine (TMG).

26. A binder system comprising one or more acetoacetate ester compounds, one or more acrylate compounds and a tertiary amine curing catalyst, wherein the one or more acetoacetate ester compound comprises isosorbide diacetoacetate, the one or more acrylate compound comprises is trimethylolpropane triacrylate and the tertiary amine curing catalyst is 1,1,3,3-tetramethylguanidine (TMG).

27. A binder system comprising one or more acetoacetate ester compounds, one or more acrylate compounds and a tertiary amine curing catalyst, wherein the one or more acetoacetate ester compound comprises Bis(hydroxymethyl)tricyclo[5.2.1.0]decane diacetoacetate, the one or more acrylate compound comprises trimethylolpropane triacrylate and the tertiary amine curing catalyst is 1,1,3,3-tetramethylguanidine (TMG).

28. The binder system of any one of items 21 to 27, wherein the amount of said tertiary amine curing catalyst in said binder system ranges from 0.1% (w/w) to 14% (w/w), from 0.2% (w/w) to 10% (w/w), from 0.3% (w/w) to 5% (w/w), from 0.4% (w/w) to 2.5% (w/w), from 0.5% (w/w) to 2.0% (w/w) or from 0.7% (w/w) to 1.5% (w/w), from 0.1% (w/w) to 2% (w/w), from 0.1% (w/w) to 1.0% (w/w), from 0.15% (w/w) to 0.7% (w/w), or from 0.15% (w/w) to 0.5% (w/w) relative to the totality of the amount of the one or more acetoacetate ester compound and the one or more acrylate compound.

29. A method of preparing the binder system of any one items 21 to 27, comprising mixing said one or more acetoacetate ester compounds and said one or more acrylate compounds and said tertiary amine curing catalyst.

30. Use of the binder system of any one of items 21 to 27 for preparing a resin.

31. A kit for forming a fiber resin composition to be used in the method as defined in one or more of items 2 to 16, the kit comprising:

an acetoacetate ester compound, an acrylate compound, an amine curing catalyst and a fiber; or
premix A comprising an acrylate compound and an amine curing catalyst, an acetoacetate ester compound and a fiber; or
premix B comprising an acetoacetate ester compound and an amine curing catalyst, an acrylate compound and a fiber;
premix C comprising an acetoacetate ester compound and an acrylate compound, an amine curing catalyst and a fiber;
wherein the fiber resin composition, the acetoacetate ester compound, the acrylate compound, the amine curing catalyst and the fiber as defined in one or more of items 2 to 16.

32. The fiber resin composition or the fiber reinforced part as defined in item 2.

33. A fiber reinforced part prepared by the method as defined in item 2.

**Claims**

1. Method for preparation of fiber reinforced parts comprising the steps of

(i) contacting a fiber with a resin composition to provide a fiber resin composition; and
(ii) curing said fiber resin composition to provide the fiber reinforced part;
wherein the resin composition comprises

a) one or more acetoacetate ester compounds comprising at least two acetoacetate ester functional groups,
b) one or more acrylate compound comprising at least two acrylate functional groups, and
c) a tertiary amine curing catalyst; and

wherein the fiber content in the fiber reinforced parts is of from 20 wt% to 80 wt% of the total weight of the fiber reinforced part.

2. Method according to claim 1, wherein
the one or more acetoacetate ester compounds are independently selected from the group consisting of 1,4-butanediol diacetoacetate, 1,6-hexanediol diacetoacetate, neopentyl glycol diacetoacetate, the diacetoacetate of 4,8-bis(hydroxymethyl)tricyclo [5.2.1.0$^{2,6}$]decane, 2-methyl-1,3-propanediol diacetoacetate, mono-, di-, tri- and tetraethylene glycol diacetoacetate, polyethylene glycol diacetoacetate, mono-, di-, tri- and tetrapropylene glycol diacetoacetate, polypropylene glycol diacetoacetate, cyclohexane dimethanol diacetoacetate, trimethylolethane triacetoacetate, trimethylolpropane triacetoacetate, ethoxylated trimethylolethane triacetoactate, propoxylated trimethylolethane triacetoactate, ethoxylated trimethylolpropanetriacetoactate, propoxylated trimethylolpropanetriacetoactate, pentaerythritol triacetoacetate, glycerol triacetoacetate, di(trimethylolpropane) tetraacetoacetate, pentaerythritol tetraacetoacetate, dipentaerythritol pentaacetoacetate, dipentaerythritol hexaacetoacetate, acetoacetylated polyvinyl alcohols, acetoacetylated polyester resins, decaglycerol deca-(Z)-oleate and an acetoacetate esters of alcohols such as isosorbide, glucose and 4,8-Bis(hydroxymethyl)tricyclo [5.2.1.0$^{2,6}$]-decane,
preferably, wherein the one or more acetoacetate ester compounds are independently selected from the group consisting of trimethylolpropane triacetoacetate, glycerol triacetoacetate and ethylene glycol diacetoacetate,
more preferably, wherein the acetoacetate ester compound is trimethylolpropane triacetoacetate or ethylene glycol diacetoacetate.

3. Method according to any one of the preceding claims, wherein the one or more acrylate compounds are independently selected from the group consisting of 1,4-butanediol diacrylate, 1,6-hexanediol diacrylate, neopentyl glycol diacrylate, the diacrylate of 4,8-bis(hydroxymethyl)tricyclo [5.2.1.0$^{2,6}$]decane, 2-methyl-1,3-propanediol diacrylate, mono-, di-, tri- and tetraethylene glycol diacrylate, polyethylene glycol diacrylate, mono-, di-, tri- and tetrapropylene glycol diacrylate, polypropylene glycol diacrylate, cyclohexane dimethanol diacrylate, alkoxylated hexanediol diacrylate, alkoxylated cyclohexane dimethanol diacrylate, propoxylated neopentyl glycol diacrylate, glycerol triacrylate, trimethylolethane triacrylate, trimethylolpropane triacrylate, ethoxylated trimethylolethane triacrylate, propoxylated trimethylolethane triacrylate, ethoxylated trimethylolpropanetriacrylate, propoxylated trimethylolpropanetriacrylate, pentaerythritol triacrylate, pentaerythritol tetraacrylate, dipentaerythritol pentaacrylate, di(trimethylolpropane) tetraacrylate, acrylated polyester oligomer, bisphenol A diacrylate, ethoxylated bisphenol A diacrylate, tris(2-hydroxyethyl) isocyanurate triacrylate, acrylated aliphatic urethane oligomer and acrylated aromatic urethane oligomer, preferably, wherein the one or more acrylate compounds are independently selected from the group consisting of tripropylene glycol diacrylate, trimethylolpropane triacrylate and di(trimethylolpropane) tetraacrylate, more preferably, wherein the acrylate compound is trimethylolpropane triacrylate.

4. Method according to any one of the preceding claims, wherein the one or more amine curing catalysts are independently selected from the group consisting of 1,1,3,3-tetramethylguanidine (TMG), 1,4-diazabicyclo[2.2.2]octane (DABCO), triethylamine (TEA), N,N-dimethylisopropylamine, 1,8-Diazabicyclo(5.4.0)undec-7-ene (DBU) and 1,5-Diazabicyclo(4.3.0)non-5-ene (DBN).

5. Method according to any one of the preceding claims, wherein the one or more amine curing catalyst is selected from 1,1,3,3-tetramethylguanidine (TMG) and 1,4-diazabicyclo[2.2.2]octane (DABCO).

6. Method according to any one of the preceding claims, wherein the amine curing catalyst is 1,1,3,3-tetramethylguanidine (TMG).

7. Method according to any one of the preceding claims, wherein
the acetoacetate ester compound comprises trimethylolpropane triacetoacetate or glycerol triacetoacetate;
the acrylate compound comprises trimethylolpropane triacrylate; and
the amine curing catalyst comprises 1,1,3,3-tetramethylguanidine (TMG) or 1,4-diazabicyclo[2.2.2]octane (DABCO), or a combination thereof.

8. Method according to any one of the preceding claims, wherein the functional group ratio of the acetoacetate ester compound to the functional group ratio of the acrylate compound is from 0.15 to 1.50.

9. Method according to claims 1 to 8, wherein the method for the preparation of the fiber reinforced parts as defined in one or more of claims 1 to 8 is a Resin Transfer Molding process, a Vacuum Infusion process, a Continuous Filament Impregnation process, a Filament Winding process, a Wet Compression Molding process or a Pultrusion process.

10. Method according to claims 1 to 8, wherein the one or more fiber are independently selected from the group consisting of carbon, glass, aramide, polyester, polyolefins, nylon, natural fibers, basalt, steel, aluminum, copper and zinc.

11. The method according to any one of the preceding claims, wherein the amount of the tertiary amine curing catalyst ranges from 0.01 to 10 wt%, from 0.05 to 7.5 wt%, from 0.05 to 5 wt%, from 0.05 to 2.5 wt%, from 0.05 to 1 wt%, from 0.05 to 0.75 wt%, from 0.075 to 0.5 wt%, or from 0.1 to 0.3 wt%.

12. A kit for forming a fiber resin composition to be used in the method as defined in one or more of claims 1 to 11, the kit comprising:

an acetoacetate ester compound, an acrylate compound, an amine curing catalyst and a fiber; or

premix A comprising an acrylate compound and an amine curing catalyst, an acetoacetate ester compound and a fiber; or

premix B comprising an acetoacetate ester compound and an amine curing catalyst, an acrylate compound and a fiber; or

premix C comprising an acetoacetate ester compound and an acrylate compound, an amine curing catalyst and a fiber;

wherein the fiber resin composition, the acetoacetate ester compound, the acrylate compound, the amine curing catalyst and the fiber as defined in one or more of claims 1 to 11.

13. The fiber resin composition or the fiber reinforced part as defined in any one of claims 1 to 11.

14. A fiber reinforced part prepared by the method as defined in any one of claims 1 to 11.

Figure 1

Figure 2

Europäisches
Patentamt

European
Patent Office

Office européen
des brevets

**EUROPEAN SEARCH REPORT**

Application Number

EP 21 18 3285

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/096142 A1 (HARRIS JOEL M [US] ET AL) 7 April 2016 (2016-04-07)<br>* page 1, paragraphs 5, 6 *<br>* page 2, paragraphs 25-27, 31-35 *<br>* page 3, paragraphs 41-47, 51-54 *<br>* page 4, paragraphs 56, 59; 60-68 *<br>* page 5, paragraphs 73, 74, 81-83 *<br>* page 6, paragraph 96-100 *<br>* page 7, paragraph 102-104; table 1 *<br>----- | 1-14 | INV.<br>B22C1/16<br>B22C1/22<br>B22C9/02<br>C08F220/60<br>C08G61/12<br>C08J5/04<br>C08K3/36<br>C08K7/06<br>C08K7/24 |
| A | US 5 459 178 A (CHAN PAUL S L [CA] ET AL) 17 October 1995 (1995-10-17)<br>* column 1, line 52 - column 7, line 35 *<br>----- | 1-14 | ADD.<br>C08F222/10 |
| A | US 5 017 649 A (CLEMENS ROBERT J [US]) 21 May 1991 (1991-05-21)<br>* the whole document *<br>----- | 1-14 | |
| A | OSMAN KONURAY ET AL: "State of the Art in Dual-Curing Acrylate Systems", POLYMERS, vol. 10, no. 2, 12 February 2018 (2018-02-12), page 178, XP055635429, DOI: 10.3390/polym10020178<br>* the whole document *<br>----- | 1-14 | |

TECHNICAL FIELDS
SEARCHED (IPC)

B22C
C08F
C08G
C08J
C08K

The present search report has been drawn up for all claims

| Place of search | Date of completion of the search | Examiner |
|---|---|---|
| The Hague | 23 September 2021 | Pipoli, Tiziana |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 18 3285

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2021

| Patent document cited in search report | | Publication date | Patent family member(s) | | Publication date |
|---|---|---|---|---|---|
| US 2016096142 | A1 | 07-04-2016 | NONE | | |
| US 5459178 | A | 17-10-1995 | AU | 3763295 A | 15-05-1996 |
| | | | US | 5459178 A | 17-10-1995 |
| | | | WO | 9612579 A1 | 02-05-1996 |
| US 5017649 | A | 21-05-1991 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5459178 A